(19) Europäisches Patentamt / European Patent Office / Office européen des brevets

(11) **EP 4 057 533 A1**

(12) **EUROPÄISCHE PATENTANMELDUNG**

(43) Veröffentlichungstag:
**14.09.2022  Patentblatt 2022/37**

(51) Internationale Patentklassifikation (IPC):
*H04L 1/00* (2006.01)

(21) Anmeldenummer: **21162296.4**

(52) Gemeinsame Patentklassifikation (CPC):
**H04L 1/0076**

(22) Anmeldetag: **12.03.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Fraunhofer-Gesellschaft zur Förderung der angewandten Forschung e.V. 80686 München (DE)**

(72) Erfinder:
• **HUPP, Jürgen**
  **91058 Erlangen (DE)**
• **HAALA, Oliver**
  **91058 Erlangen (DE)**
• **FROTZSCHER, Andreas**
  **91058 Erlangen (DE)**
• **ELLINGER, Hannes**
  **91058 Erlangen (DE)**
• **LIPP, Stefan**
  **91058 Erlangen (DE)**
• **BURKHARDT, Frank**
  **91058 Erlangen (DE)**

(74) Vertreter: **Pfitzner, Hannes et al Schoppe, Zimmermann, Stöckeler Zinkler, Schenk & Partner mbB Patentanwälte Radlkoferstraße 2 81373 München (DE)**

(54)  **KOMMUNIKATIONSVERFAHREN UND KOMMUNIKATIONSTEILNEHMER**

(57)  Kommunikationsverfahren mit folgenden Schritten:

Kommunikationsverfahren mit folgenden Schritten:
Übertragen von zumindest einem Datenpaket (20) mit einem Header (24) und ein codiertes Paket (22),
wobei der Header (24) mindestens eine erste zur Interpretation des codierten Pakets relevante Information aus einer Gruppe enthält, wobei die Gruppe ein oder mehrere der folgenden Informationen umfasst:
- Information bezüglich ein oder mehrerer Quellen (32) des codierten Pakets (22) und Informationen bezüglich ein oder mehrerer Senken (34) des codierten Pakets (22) oder eine Information bezüglich ein oder mehrerer Quellen (32) oder Senken (34) des codierten Pakets (22) in Kombination mit einer Information bezüglich einer Übertragungsrichtung bzw. bezüglich ein oder mehrerer weitere Kommunikationspartnern (34);
- Codiervektor (CV), wobei der Codiervektor (CV) separiert enthalten, integriert enthalten, vorgegeben oder referenziert ist, wobei dem Codiervektor (CV) Codier-Koeffizienten zugeordnet sind; und

Ableiten einer zweiten zur Interpretation des codierten Pakets relevanten Information der Gruppe aus der mindestens einen ersten Information unter Berücksichtigung einer vorkonfigurierten Information.

Fig. 6a

Fig. 6b

EP 4 057 533 A1

**Beschreibung**

Ausführungsbeispiele der vorliegenden Erfindung beziehen sich auf ein Kommunikationsverfahren sowie auf einen Kommunikationsteilnehmer, wie einen Sender (Transmitter) oder einen Empfänger (Receiver) bzw. einen Transceiver, und auf ein entsprechendes System mit ein oder mehreren Kommunikationsteilnehmern. Bevorzugte Ausführungsbeispiele beziehen sich auf ein Verfahren für effiziente Network Coded Cooperation in Echtzeit-Funksystemen oder allgemein auf Networkcoding.

An Funksysteme, insbesondere in industriellen Anwendungen mit schnellen Reaktionszeiten oder hohen Sicherheits- bzw. Verfügbarkeitsvorgaben werden hohe Anforderungen hinsichtlich Paketverlustrate, Datenrate oder Latenz bei der bidirektionalen Übertragung gestellt.

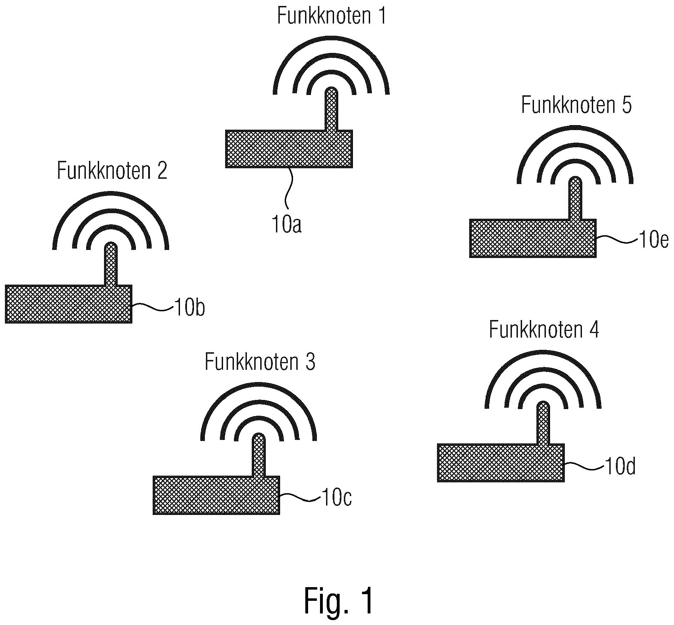

Fig. 1 zeigt ein beispielhaftes Funksystem bestehend aus fünf Funkknoten 10A bis 10D. Beispiele für solche Knoten sind Sensoren oder Aktoren in beweglichen Szenarien, wie zum Beispiel (Motor-) Steuerungen. Beispiele dafür sind Sensoren oder Aktoren in beweglichen Szenarien oder (Motor-) Steuerungen.

Um ein deterministisches Zeitverhalten bei der Funkübertragung zu realisieren werden üblicherweise Scheduling-Verfahren oder Zeitmultiplex-Verfahren (Time Division Multiple Access TDMA) eingesetzt. Im Falle einer fehlerfreien Übertragung führt dies zu einer deterministischen Latenz bzw. Zykluszeit. Bei einer Störung der Übertragung müssen Maßnahmen ergriffen werden. Diese Maßnahmen dürfen die Zeitanforderungen für die Übertragung allerdings nicht verletzen, da äußere Steuerungssysteme ansonsten auf die Übertragungsstörung reagieren, beispielsweise mit einem Notbetrieb oder einer Abschaltung der Maschine.

Die Maßnahmen zur Steigerung der Robustheit erfolgen üblicherweise auf verschiedenen Wegen:

- Kanalcodierung zur Verbesserung eines einzelnen Links
- Retransmissions oder ARQ-/HARQ-Verfahren mit einer Paketwiederholung innerhalb der Zykluszeit.
- Antennendiversität, zur Ausnutzung mehrerer Übertragungspfade bei Mehrwegeausbreitung
- Relaying und cooperative Verfahren (Cooperative Communication CC), also Paketweiterleitung durch andere Funkknoten (FK) als weiterleitender Zwischenknoten. Über diesen Zwischenknoten ergibt sich ebenfalls Pfadredundanz.

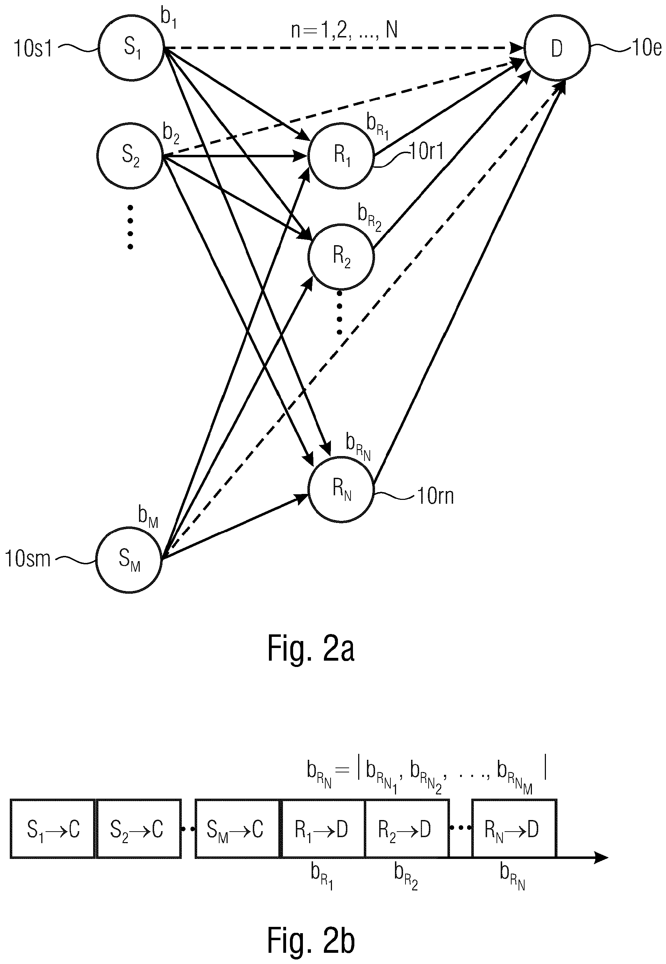

Eine derartige kooperative Kommunikation ist beispielsweise in Fig. 2a gezeigt.

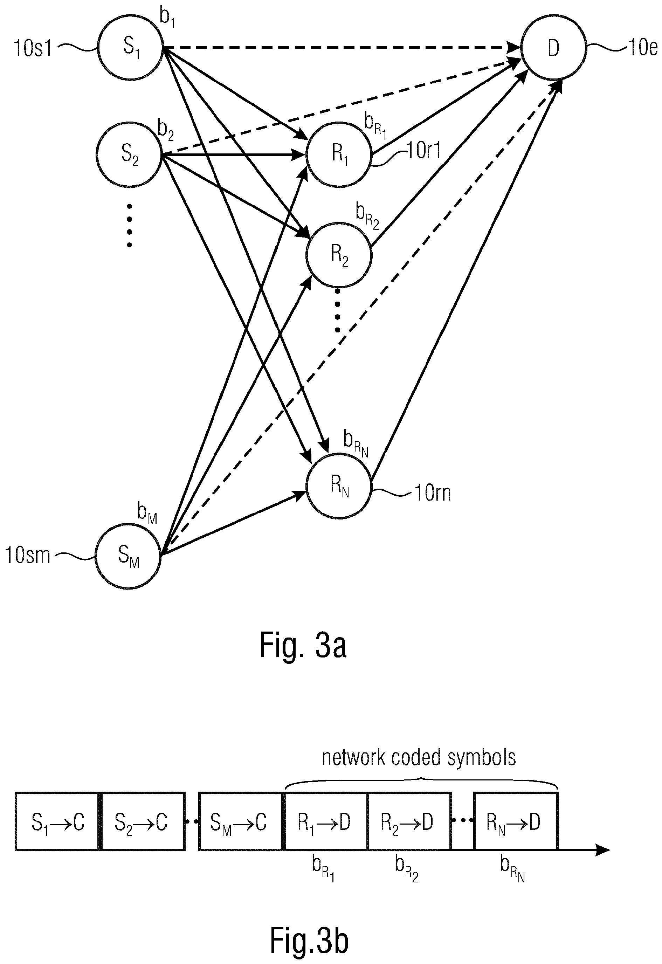

Fig. 2a zeigt mehrere Sender 10S1 bis 10SM, die ein Datenpaket zu einem Empfänger 10E übermitteln. Dazwischen sind noch mehrere Relaisknoten 10R1 bis 10RN vorgesehen. Beispielsweise übermitteln die Sender 10S1 bis 10SM (Source Nodes) das Datenpaket in M (orthogonalen) Ressourcen Blöcken (Zeit und/oder Frequenz-Blocks). Die N Relaisknoten 10R1 bis 10RN leiten diese Informationen an 10E weiter (durchgezogene rote Linien). Jeder Relaisknoten benötigt z.B. M orthogonale Ressource, um seinen Übertragungsvektor bRi zu übertragen, der ein Vektor der Länge M ist. Dieser Vorgang stellt im Gegensatz zu der direkte Verbindung (gestrichelte Linie) eine indirekte (cooperative) Übertragung des Datenstroms von 10S1 zu 10E dar. Der entstehende Datenstrom ist in Fig. 2b illustriert. Wie zu erkennen ist, ist der Ressourcenbedarf für die Weiterleitung (vgl. Übertragungsvektor $b_{R_N}$) im Vergleich zu der initialen Übertragung $S_n$ => C (C = alle potentiellen Empfänger, 10e und/oder Relaisknoten 10R1 bis 10RN ) bzw. direkten Übertragung (gestrichelte Line) signifikant erhöht. Hintergrund ist, dass jede Relaisknoten 10R1 bis 10RN alle Datenpakete einzeln weiterleitet. Ein Einsatz von Network Coding (NC) oder NCC bei der Weiterleitung durch die Zwischenknoten 10R1 bis 10RN verbessert die Situation, wie anhand von Fig. 3 gezeigt ist.

Fig. 3a zeigt wiederum die Situation zwischen den Datenquellen 10S1 bis 10SM in Kommunikation mit den Datensenken 10E unter Verwendung der Relais 10R1 bis 10RN. Die Relaisknoten 10R1 bis 10RN führen z.B. NC oder NCC durch und senden in N Ressourcenblöcken, um das Datenpaket an den Empfänger 10E (Senke) weiterzuleiten. Durch die Network Coded Cooperation NCC werden die Übertragungsvektoren bR1, bR2 und bRN (vgl. Fig. 2b) signifikant komprimiert (vgl. bR1, bR2, bRN in Fig. 3b), wobei die Übertragungsvektoren bRi weiterhin aus den Informationssignalen, die von Quellknoten übertragen sind, erzeugt werden.

Wenn über Kanalcodierung die Möglichkeiten auf einem Link ausgeschöpft sind, bieten CC und insbesondere NCC großes Potenzial, da dadurch die so genannte Diversity Order (Anzahl der Ausbreitungspfade) des Gesamtsystems vergrößert wird.

Da bei CC jedes empfangene Paket weitergeleitet wird, erhöht sich die Kanalbelegung stark. Dies lässt sich durch NCC vermeiden, da hier die weitergeleiteten Pakete kombiniert werden. Dadurch wächst die Kanalbelegung nicht an. Allerdings braucht es nun eine Signalisierung welche Pakete in dem kombinierten Paket enthalten sind.

Für Funknetze mit niedriger, deterministischer Latenz stellt dieser NCC-Signalisierungsaufwand ein zu lösendes Problem dar.

Auch im Stand der Technik gibt es einige Ansätze zur Lösung des erläuterten Problems. NCC beschreibt Verfahren, bei dem Datenpakete vor einer Weiterleitung durch einen Router codiert zusammengefasst werden. Dabei werden mehrere Datenpakete (Anzahl *n*) jeweils mit Koeffizienten (sog. Codier-Koeffizienten) gewichtet und addiert. Hierfür wird die Algebra in endlichen Körpern eingesetzt und mit Multiplikation / Addition in Galois-Feldern mit einer Größe / Symbollänge von g Bit gearbeitet.

Nachfolgend wird eine Analyse zum Stand der Technik gegeben, wobei die Analyseergebnisse, das heißt also die Erkennung der Probleme im Stand der Technik, Teil der hier beanspruchten Lehre ist, da das Erkennen der Probleme und deren Ursachen den Aufsetzpunkt zur Erfindung darstellt. Insbesondere die Analyse der Ursachen könnte Hinweise zur beanspruchten Lösung enthalten und ist daher von der Reflexion des Stands der Technik getrennt zu betrachten.

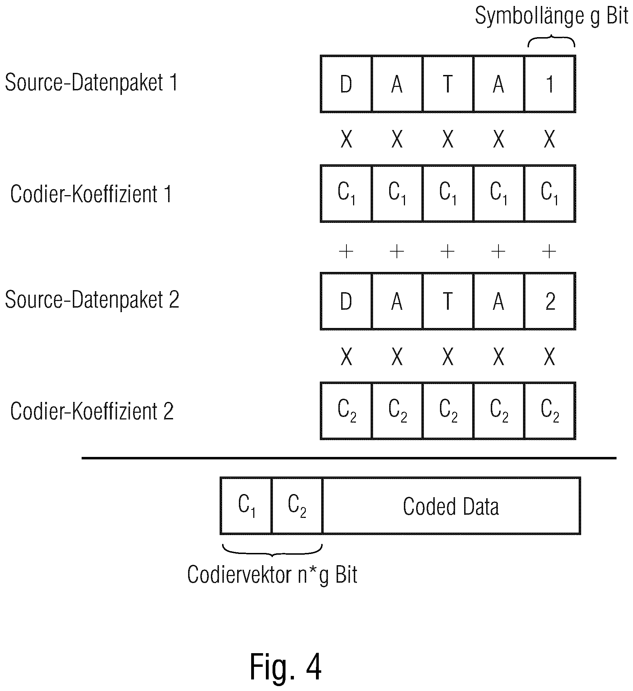

Fig. 4 illustriert eine beispielhafte Berechnung eines codierten Paketes anhand von zwei Source-Paketen (Source-Datenpaket 1, Source-Datenpaket 2). Jedes Source-Datenpaket wird mit einem entsprechenden Codier-Koeffizienten C1 beziehungsweise C2 multipliziert und aufaddiert (XOR-Operation). Die Konkatenation der Codier-Koeffizienten C1 und C2 wird Codiervektor n*g (Größe: 2*g Bit) genannt.

Damit ein Empfänger das Paket decodieren kann, sind Informationen - relevante Informationen -, z.B. über die enthaltenen Source-Pakete, codierten Pakete, deren jeweilige Codier-Koeffizienten und/oder allgemein den Aufbau der Payload bekannt. Codier-Koeffizienten werden üblicherweise zu einem sog. Codiervektor zusammengefasst.

Die Datenmenge g eines Codier-Koeffizienten in Bit hängt von der verwendeten Größe/Dimension des Galois-Feldes ab. Für Galois-Felder mit Charakteristik 2 ergeben sich damit $2^9$ Codier-Koeffizienten. Für die minimale Datenmenge von g=1 kann ein Codier-Koeffizient die Werte 0 oder 1 annehmen.

Wenn nicht bekannt ist, welche Source-Pakete enthalten sind und zwischen welchen FK diese übertragen werden sollen, muss noch eine zusätzliche Header-Information übertragen werden. Diese beinhaltet pro Source-Paket zwei logische Adressen, welche die Datenquelle sowie die Datensenke festlegen sowie ein Codier-Koeffizient, wobei eine logische Adresse durch eine sog. Knotenidentität (Node-ID/NID) beschreiben werden kann. Dazu besitzt jeder Funkknoten eine eindeutige NID (auf die Zuordnung der NID gehen wir nicht ein).

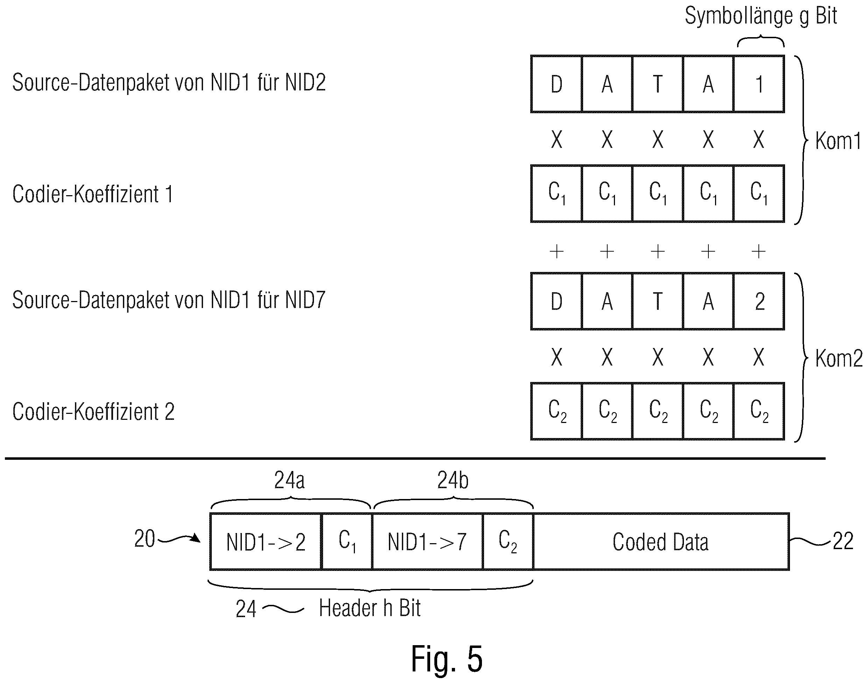

Das ist in Fig. 5 weiter gezeigt, mit einem vollständigen Header. Das Beispiel aus Fig. 5 startet ebenfalls von der Annahme, dass das Source-Datenpaket DATA1 mit dem Codier-Koeffizient C1 multipliziert und das Source-Datenpaket DATA2 mit dem Codier-Koeffizient C2 multipliziert werden soll, um diese dann zu den codierten Paket(en) (Coded Data) aufzuaddieren. Die codierten Pakete (Payload-Datenpaket) sind Teil eines Datenpakets 20 und mit dem Bezugszeichen 22 versehen. Vor den codierten Paketen ist der Header 24 eingefügt. Dieser umfasst beispielsweise eine Information bezüglich Datenquellen und Datensenken (z.B. NID1 zu NID2) und der zugehörigen Codier-Koeffizienten (z.B. C1). Diese relevante Information ist mit dem Bezugszeichen 24A versehen und definiert im Wesentlichen die Randbedingungen für die Übermittlung von DATA 1 (Sourcepaket 1) von NID1 zu NID2 (vgl. Bezugszeichen KOM1). Daneben weist der Header 24 auch noch den Bereich 24B auf, bei welchem die Information (vgl. Bezugszeichen KOM2) bezüglich der Übermittlung von DATA 2 (Sourcepaket 2) übermittelt werden. Dieser enthält wiederum die relevanten Informationen bezüglich Datenquelle NID1, Datensenke NID7 sowie des verwendeten Codier-Koeffizienten C2.

Beispiel 1 beliebige Kommunikation zwischen Funkknoten:

Funkknoten haben eine kurze NID (7 Bit) als logische Adresse. Als Galois-Feld wird GF($2^4$) mit *g* = 4 gewählt. Weiterhin sollen in einem Kommunikationszyklus acht Source-Pakete übertragen werden. Ein allgemeingültiges Datenpaket könte dann die folgende Form haben:

| | | | |
|---|---|---|---|
| Source-NID2 | Destination-NID1 | Coeff1 | Header 24 |
| Source-NID3 | Destination-NID2 | Coeff2 | |
| Source-NID4 | Destination-NID3 | Coeff3 | |
| Source-NID5 | Destination-NID4 | Coeff4 | |
| Source-NID1 | Destination-NID5 | Coeff5 | |
| Source-NID2 | Destination-NID1 | Coeff6 | |
| Source-NID3 | Destination-NID2 | Coeff7 | |
| Source-NID4 | Destination-NID3 | Coeff8 | |
| Payload Coded Data | | | Payload 22 |

Wie zu erkennen ist, umfassen die Payload Coded Data 22 Daten für voraussichtlich acht zu übermittelnde Source-Pakete, was anhand des Headers 24 deutlich wird. Der Header umfasst je zu übermittelten Source-Paket (je Zeile) eine Information bezüglich der Datenquelle, eine Information bezüglich der Datensenke sowie den entsprechenden Codier-Koeffizienten.

Die notwendige NCC-Header-Länge beträgt pro codiertem Source-Paket 7 Bit Source-NID + 7 Bit Destination-NID + Galois-Feld Größe 4 Bit =18 Bit. Insgesamt ergibt sich somit eine Datenmenge von 8*18 Bit = 18 Byte.

Funkknoten haben eine kurze NID (7 Bit) als logische Adresse, 1 Bit zeigt an, ob es sich für den festen Funkknoten (Basisstation) um einen Uplink oder Downlink handelt. Als Galois-Feld wird GF($2^4$) mit $g$ = 4 gewählt. Weiterhin sollen in einem Kommunikationszyklus acht Source-Pakete übertragen werden, dies entspricht z.B. einem Funksystem in dem eine Basisstation mit vier Feldgeräten kommuniziert.

Ein allgemeingültig codiertes Paket wäre dann (Funkknoten 5 ist hier bspw. Basisstation):

| NID1 | DL | Coeff1 | Header 24 |
|------|----|--------|-----------|
| NID2 | DL | Coeff2 | |
| NID3 | DL | Coeff3 | |
| NID4 | DL | Coeff4 | |
| NID1 | UL | Coeff5 | |
| NID2 | UL | Coeff6 | |
| NID3 | UL | Coeff7 | |
| NID4 | UL | Coeff8 | |
| Payload Coded Data | | | Payload 22 |

Das heißt also, dass in diesem Fall der Header 24 nur eine Information bezüglich der Datenquelle in Kombination mit einer Information bezüglich der Datenflussrichtung aufweist. Die Codier-Koeffizienten sind je zu übermittelten Source-Paket weiterhin enthalten.

Die NCC-Header-Länge wäre pro codiertem Quell-Paket:

$$7 \text{ Bit NID} + 1 \text{ Bit UL/DL} + \text{Galois-Feld Größe 4 Bit} = 12 \text{ Bit}$$

Also gesamt Len = NQuell-Pakete * 12 Bit = 8 * 12 Bit = 12 Byte.

Bei einer Übertragung mit kurzer Latenz ist die pro Kommunikationszyklus übertragbare Datenmenge begrenzt. Typische Paketgrößen sind 30 - 255 Byte.

Darauf bezogen wäre ein Header-Overhead von 12 bzw. 18 Byte ein großer Anteil.

Bereits im Stand der Technik gibt es einige Ansätze, die verwandte Probleme adressieren. Hierunter ist beispielsweise die internationale Patentanmeldung WO 2014/134276 A1 zu nennen, die sich auf ein drahtloses Netzwerkprotokoll und entsprechende Verfahren bezieht. Eine weitere Stand-der-Technik-Schrift ist die US 964780 B2, die sich mit Netzwerk Coding beschäftigt. Die US 10270468 B2 bezieht sich auf ein Verfahren zum Verwenden in einem verteilten Speichersystem. Die US 2018/0302836 beschreibt ein Protokoll für Mesh-Netzwerke. Die EP 3384619 A1 beschreibt ein Verfahren und eine Anordnung zur Durchführung von erweiterten Netzwerk-Codierungen.

Alle obigen Ansätze bieten nicht die Möglichkeit, die Header-Länge zu reduzieren beziehungsweise sie signifikant zu reduzieren.

Ausführungsbeispielen der vorliegenden Erfindung liegt die Aufgabe zugrunde, den Signalisierungsaufwand in Funkkommunikationssystemen zu reduzieren, insbesondere bei Funckommunikationssystemen, die Echtzeitkommunikation mit niedriger Latenz unterstützen.

Die Aufgabe wird durch den Gegenstand der unabhängigen Patentansprüche gelöst.

Ausführungsbeispiele der vorliegenden Erfindung schaffen ein Kommunikationsverfahren mit dem zentralen Schritt des Übertragens, z.B. des Weiterleitens mittels eines Relais-Knotens, von zumindest einem Datenpaket. Das weist einen Header und ein codiertes Paket auf. Die codierten Pakete können entsprechend Ausführungsbeispielen für die Übertragungen von mehreren Source-Paketen, z. B. zwischen ein oder mehreren Quellen und ein oder mehreren Senken oder zwischen einer Quelle und ein oder mehreren Senken in unterschiedlichen Übertragungsrichtungen, verwendet werden. Hierbei ist z.B. für die als codiertes Paket zu übermittelnden Source-Pakete je ein Codiervektor verwendet (d.h. ein Codiervektor je codiertes Paket). Mindestens eine relevante Information z.B. bzgl. des Codiervektors kann im Header mitübertragen werden. Der Header enthält (umfasst) in ableitbarer Weise mindestens eine erste zur Interpretation des codierten Pakets relevante Information aus einer Gruppe, wobei die Gruppe ein oder mehrere der folgenden Informationen umfasst:

- Information bezüglich ein oder mehrerer Quellendes codierten Pakets und Informationen bezüglich ein oder mehrerer Senken des codierten Pakets oder eine Information bezüglich ein oder mehrerer Quellen (32) oder Senken descodierten Pakets in Kombination mit einer Information bezüglich einer Übertragungsrichtung;

- Codiervektor, wobei der Codiervektor separiert enthalten, integriert enthalten, vorgegeben oder referenziert ist, wobei dem Codiervektor Codier-Koeffizienten zugeordnet sind.

Ferner umfasst der Übertragungsvorgang das Ableiten einer zweiten zur Interpretation des codierten Pakets relevanten Information der Gruppe aus der mindestens einen ersten Information unter Berücksichtigung einer vorkonfigurierten Information.

Ausführungsbeispielen der vorliegenden Erfindung liegt die Erkenntnis zugrunde, dass durch die Übermittlung von einem Codiervektor, der im Header entweder enthalten oder durch eine andere Information referenziert ist, und einer Information bezüglich Datenquelle und Datensenke, die direkt enthalten oder referenziert (d.h. ableitbar) ist, in Kombination mit einer vorkonfigurierten Information, z.B. Codiermatrix, Scheduling-Tabelle oder Request-Liste, der Signalisierungsaufwand minimiert werden kann. Hintergrund ist, dass durch die wenigen im Header enthaltenen relevanten Information(en) die weiteren relevanten Information(en) unter Verwendung der vorkonfigurierten (z.B. im Vorfeld übertragenen) Information bestimmt werden können. Eine erste Minimierungsstufe ist beispielsweise dadurch möglich, dass in einer Art Liste (Requestliste) Kodierkoeffizienten oder CV Indizes (Referenz auf einen Kodier-Koeffizienten bzw. im Codiervektor) zugeordnet zu ein oder mehreren Kommunikationspartnern bzw. Kommunikationspartner-Paare zusammengefasst sind, sodass nicht mehr alle für das Codieren / Decodieren notwendigen Codier-Informationen im Header übermittelt werden müssen. Additiv oder alternativ können Codier-Koeffizienten bzw. Codiervektor(en) zugeordnet zu Kommunikationsvorgängen und/oder Source-Paketen in einer Art Matrix (Codiermatrix) enthalten sein, wobei auf diese Matrix durch eine Headerinformation referenziert wird. Somit erhält jeder Kommunikationspartner für die zu übermittelnden Source-Pakete die notwendigen Codier- beziehungsweise Decodierinformationen, insbesondere die vorkonfigurierten Information, wobei der Umfang des Headers durch Referenzieren minimiert wird.

Entsprechend bevorzugten Ausführungsbeispielen können also vorkonfigurierte Konfigurationen, wie zum Beispiel eine Codiermatrix, eine Scheduling-Tabelle oder eine Request-Liste verwendet werden, um den Informationsgehalt im Header zu komprimieren. Die Codiermatrix kann entsprechend Ausführungsbeispielen beispielsweise einen Zusammenhang zwischen Codiervektor beziehungsweise Codiervektor-Index, die beide einen Rückschluss auf die Codier-Koeffizienten zulassen, und Nummerierungen des zu übermittelten Source-Pakets enthalten. Alternativ oder additiv kann eine sogenannte Scheduling-Tabelle entsprechend weiteren Ausführungsbeispielen verwendet werden. Diese gibt beispielsweise aus Sicht des sendenden Funkknotens (Quelle) eine Datensenke vor und zwar in Abhängigkeit von einer Kommunikationsvorgangsnummer. Alternativ oder additiv kann eine sogenannte Request-Liste entsprechend Ausführungsbeispielen verwendet werden, die beispielsweise ausgehend von einem Sendeknoten (Datenquelle) für unterschiedliche Datensenken und/oder unterschiedliche Kommunikationspartner in Verbindung mit einer entsprechenden Datenflussrichtung Codiervektorindizes vorgibt. Alternativ oder additiv kann diese Request-Liste auch eine Zuordnung zu einer entsprechenden Cluster ID vorgeben.

Das heißt also, dass entsprechend einem Ausführungsbeispiel das Basisausführungsbeispiel dahingehend erweitert wird, dass Informationen, die typischerweise in dem Header übertragen werden, nur noch in ableitbarer Weise übertragen werden, nämlich durch Referenzierung auf vorkonfigurierte Informationen, wie zum Beispiel eine Scheduling-Tabelle, eine Request-Liste oder eine Codiermatrix. Anders ausgedrückt heißt es, dass beispielsweise die Information bezüglich Quelle und Senke und/oder die Information bezüglich des Codiervektors nicht nur direkt, sondern auch indirekt im Header enthalten sind. Dadurch ist es möglich, im Minimalfall mit einem Bit pro Payloadteil (Sourcedatenpaket) auszukommen.

Entsprechend Ausführungsbeispielen kann das Kommunikationsverfahren den Schritt des Ableitens einer Information des Headers aus einer anderen Information des Headers oder des Ableitens einer Information des Headers aus einer anderen Information des Headers unter Berücksichtigung einer Scheduling-Tabelle und/oder einer Codiermatrix und/oder einer Request-Liste aufweisen.

Entsprechend Ausführungsbeispielen kann jedem der mehreren zu übermittelnden Source-Pakete je KV genau ein Kodierkoeffizient zugeordnet sein. Wenn man entsprechend weiteren Ausführungsbeispielen davon ausgeht, dass das Übertragen ausgehend von einem festen Kommunikationspartner (z.B. einer festen Basisstation oder Quelle) erfolgt, kann auf eine Zusatzinformation bezüglich einer Quelle im Header verzichtet werden. Das heißt also, dass der Header nur eine Information bezüglich ein oder mehreren Senken der Payload (codiertes Paket), ggf. zusammen mit einer Übertragungsrichtung aufweist.

Entsprechend Ausführungsbeispielen wird die oben erläuterte Request-Liste wie folgt zur Ableitung einer weiteren Information verwendet: Die Request-Liste weist eine Information bezüglich der ein oder mehreren Quellen und/oder Senken für ein oder mehrere Source-Pakete auf. Beispielsweise kann die Request-Liste eine Zuordnung von ein oder mehreren Quellen und/oder ein oder mehreren Senken zu einem entsprechenden Codiervektorindex aufweisen.

Entsprechend Ausführungsbeispielen weist das Datenpaket für zumindest zwei Übertragungen umfassend eine Uplink-Übertragung und eine Downlink-Übertragung oder zumindest zwei geplante Übertragungen zwischen unterschiedlichen Kommunikationspartnern auf. Diese CV-Indizes können dann in entsprechend fortlaufender Nummerierung in der Request-Liste enthalten sein. Entsprechend Ausführungsbeispielen werden Kommunikationsvorgänge für mehrere Datenpakete in einer zeitlichen Abfolge durchgeführt. D.h. der Schritt des Übertragens bzw. die Schritte des Übertragens Ableiten (in Kombination) werden für ein oder mehrere (fortlaufend nummerierte) Kommunikationsvorgänge wiederholt und/oder in einer zeitlichen Abfolge (TDMA) wiederholt und können deshalb (fortlaufend) nummerierten sein. Entsprechend Ausführungsbeispielen kann diese zeitliche Abfolge in einer sogenannten Scheduling-Tabelle festgelegt werden. Die Scheduling-Tabelle umfasst entsprechend Ausführungsbeispielen eine Zuordnung von Kommunikationsvorgängen zu jeweiligen Quellen und/oder jeweiligen Senken. Beispielsweise kann die zeitliche Abfolge der Kommunikationsvorgänge beziehungsweise die Scheduling-Tabelle eine feste Zuordnung von Zeitslots zu der oder den jeweiligen Datenquellen (und/oder zu jeweiligen Datensenken) haben. Alternativ kann ein fester Kommunikationspartner und ein oder mehrere zugehörige Quellen oder Senken je Kommunikationsvorgang vorgegeben sein. Hier ist dann auch eine Angabe bezüglich Übertragungsrichtung denkbar.

Bezüglich des Codiervektors bzw. des gewünschten (d.h. geplanten und/oder erwarteten) Codiervektors sei angemerkt, dass dieser entsprechend Ausführungsbeispielen abhängig beziehungsweise ableitbar von einer (fortlaufenden) Nummerierung der Kommunikationsvorgänge sein kann. Dieser Zusammenhang oder allgemein der Zusammenhang zwischen Kommunikationsvorgang (KV) und Kodierkoeffizienten für ein Source-Packet kann beispielsweise in einer sogenannten Codiermatrix hinterlegt sein. Entsprechend Ausführungsbeispielen legt die Codiermatrix einen Zusammenhang zwischen Kommunikationsvorgang und Kodierkoeffizienten für ein Source-Packet fest. Alternativ ist in der Codiermatrix eine feste Zuordnung eines jeweiligen festen Kodierkoeffizienten zu einem jeweiligen Kommunikationsvorgang und einem Codiervektorindex definiert, wobei der Header als Information bzgl. des Codiervektors (CV) eine Information dahingehend enthält, ob ein Source-Paket (zugeordnet zu einem Codiervektorindex) in dem Datenpaket (20) enthalten ist (vgl. unten Erweiterung 1). Anders ausgedrückt heißt es, dass die Codiervektoren je Datenquelle - Datensenke - Paar oder allgemein je Datenquelle und/oder je Datensenke, ggf. in Kombination mit der Übertragungsrichtung festgelegt sind.

Entsprechend weiteren Ausführungsbeispielen kann statt dem Codiervektor mit Kodierkoeffizienten ein Codiervektor-Index, d.h. z.B. Zeilenindex (Referenz auf einen gewünschten Codiervektor) im Header und/oder in einer Codiermatrix vorgesehen sein. Dieser Codiervektor-Index ist beispielsweise je Kommunikationsvorgang vorgegeben bzw. unmittelbar von dem jeweiligen Kommunikationsvorgang ableitbar, wobei aus diesem Codiervektor-Index unter Nutzung der Codiermatrix wiederum ein gewünschter Codiervektor ableitbar ist (beispielsweise wenn Request-Liste und/oder Scheduling-Liste und/oder Codiermatrix bekannt ist). Hierbei wird dann ein sogenanntes komprimiertes (verlustfrei komprimiertes) codiertes Datenpaket geschaffen.

Entsprechend weiteren Ausführungsbeispielen weist der Header nur Informationen bezüglich einer Quelle je zu übermittelndem Source-Paket auf. Das ermöglicht beispielsweise, dass die Senke aus der Information bezüglich der Quelle ableitbar ist, wenn zum Beispiel die Request-Liste und/oder die Scheduling-Tabelle und/oder die Codiermatrix verwendet wird. Entsprechend Ausführungsbeispielen weist die Scheduling-Tabelle eine Angabe bezüglich einer Senke auf.

Entsprechend weiteren Ausführungsbeispielen ist ein Clustern von mehreren Requests zwischen mehreren Quellen und mehreren Senken oder zwischen einer Quelle und einer Senke in unterschiedlichen Übertragungsrichtungen denkbar. Die unterschiedlichen Cluster können in der Requestliste ausgewiesen werden und ermöglichen dadurch einzelnen Paaren von Source/Quelle die Art der Beteiligung dieser Knoten an einem Kommunikationsvorgang festzulegen, um vorteilhafterweise die CV-Länge zu reduzieren, da z.B. derselbe CV für unterschiedliche Cluster wiederverwendet werden kann. D.h. also, dass die Request-Liste um eine Zuordnung ergänzt wird, welche jedem Request ein Cluster zuordnet ist.

Entsprechend Ausführungsbeispielen erfolgt vor dem Übertragen des zumindest einen Datenpakets ein Austausch bzw. Verteilen zwischen den Kommunikationspartnern von vorkonfigurierten Informationen, wie Scheduling-Tabelle und/oder Codiermatrix und/oder Request-Liste. Entsprechend Ausführungsbeispielen kann auf Basis der Scheduling-Tabelle und/oder Codiermatrix und/oder Request-Liste eine Konfiguration von Sender und/oder Empfänger erfolgen. Das ist vorteilhaft, da so die Informationen im Header reduziert werden und alle auf die gleichen vorkonfigurierten Daten zurückgreifen.

Wenn man das oben erläuterte Kommunikationsverfahren auf den Sende bzw. Weiterleitungsvorgang reduziert, wird das Übermitteln eben durch einen Sender beziehungsweise beim Senden / Weiterleiten durchgeführt. Entsprechend Ausführungsbeispielen kann das Senden die Unterschritte des Codierens der Payload unter Verwendung eines Codiervektors und/oder des Generierens des Headers umfassen. Entsprechend weiteren Ausführungsbeispielen sind folgende Unterschritte ebenfalls noch enthalten:

- Auslesen eines für den aktuellen Kommunikationsvorgang festgelegten (geplanten) Codiervektors aus einer Codiermatrix;

- Prüfen und/oder Anpassen von Codier-Koeffizienten zugeordnet zu dem Codiervektor (Anpassen heißt hier, dass ein ausgelesener Codiervektor entsprechend geändert wird, wenn nicht alle Source-Pakete - wie geplant - übertragen werden können: beispielsweise wird der CV 345 als 305 gesetzt, wenn das zweite Datenpaket (Datenpaket für den zweiten Kodierkoeffizienten) nicht zu übertragen ist; wenn beispielsweise Koeffizient ungleich 0 dann prüfen ob Quellpaket verfügbar; falls nicht verfügbar setze Koeffizient = 0 im Header;

- Codieren eines Quellpakets unter Verwendung der Codier-Koeffizienten;

- Generieren des Headers unter Berücksichtigung des Codiervektors,

- Kombinieren des Headers und der Payload /kodierten Paket(e) zu einem Datenpaket.

Wenn man nun entsprechend weiteren Ausführungsbeispielen das Kommunikationsverfahren auf das Empfangen reduziert, kann das also Teil des Empfangens sein beziehungsweise durch einen Empfänger durchgeführt werden. Hierbei weist das Kommunikationsverfahren beispielsweise auch noch die folgenden Schritte auf:
Auslesen des für den aktuellen Kommunikationsvorgang definierten (erwarteten) Codiervektors aus einer Codiermatrix;

- Decodieren der Payload unter Verwendung des Codiervektors.

- Entsprechend einem Ausführungsbeispiel prüft beispielsweise nach dem Konfigurieren jeder Kommunikationspartner, ob er an dem Kommunikationsvorgang beteiligt ist.

Das Verfahren kann selbstverständlich auch computerimplementiert sein, so dass die einzelnen Schritte durch eine Software indiziert werden.
Ein weiteres Ausführungsbeispiel bezieht sich auf ein Datenpaket mit einem Header, wobei der Header eben die oben erläuterten zur Interpretation relevanten Informationen in ableitenbarer Weise (z.B. durch Referenz auf eine andere vorab ausgetauschte Information) umfasst.
Ein weiteres Ausführungsbeispiel bezieht sich auf einen Kommunikationspartner, insbesondere einen Sender oder Relay beziehungsweise insbesondere auf einen Empfänger.
Der Kommunikationspartner ist ausgebildet, um zumindest ein Datenpaket mit einem Header und einer Payload / kodierten Pakte(n) zu übertragen, wobei der Header folgende Informationen in ableitbarer Weise aufweist:

- Information bezüglich ein oder mehrerer Quellen der Payload und Informationen bezüglich ein oder mehrerer Senken der Payload oder eine Information bezüglich ein oder mehrerer Quellen oder Senken der Payload in Kombination mit einer Information bezüglich einer Übertragungsrichtung;

- Codiervektor, wobei der Codiervektor separiert enthalten, integriert enthalten oder vorgegeben ist; wobei dem Codiervektor Codier-Koeffizienten zugeordnet sind.

Der Kommunikationspartner ist ausgebildet, um eine Information des Headers aus einer anderen Information des Headers unter Berücksichtigung einer vorkonfigurierten Information.
Kommunikationsteilnehmer können selbstverständlich auch Sender und Empfänger gemeinsam sein. Das heißt also, dass jeder Kommunikationsteilnehmer einen Transceiver mit einem Empfänger und einem Sender aufweist. Als Kommunikationsteilnehmer kommen beispielsweise UEs oder ioT-Devices oder ähnliches zum Einsatz.
Ein weiteres Ausführungsbeispiel bezieht sich auf ein Kommunikationssystem mit zumindest einem Kommunikationsteilnehmer, der als Sender fungiert und einem Kommunikationsteilnehmer, der als Empfänger fungiert. Selbstverständlich kann das Kommunikationssystem auch eine Mehrzahl an Kommunikationsteilnehmer umfassen.
Entsprechend Ausführungsbeispielen kann das entwickelte Verfahren für deterministische Kommunikationssysteme mit niedriger Latenz eingesetzt werden, das heißt die Kommunikation zwischen den Knoten erfolgt innerhalb eines Kommunikationszyklus'.
Entsprechend weiteren Ausführungsbeispielen kommunizieren die Funkknoten direkt untereinander, das heißt sie befinden sich tendenziell alle in Funkreichweite untereinander. Dadurch kann der so genannte Overhearing-Effekt genutzt werden. Dabei können Funcknoten durch Mitlauschen auch Datenpakete empfangen, die nicht für sie bestimmt sind, sondern eigentlich für andere Funkknoten, und diese dann weiterleiten.
Entsprechend Ausführungsbeispielen werden Die Teilnehmeranzahl und die Datenmenge pro Kommunikationszyklus, die zwischen den Funkknoten ausgetauscht, sind konfigurierbar und auch zur Laufzeit veränderbar. Eine spontane, schnelle Änderung im Zeitbereich des Kommunikationszyklus ist zwingend nicht vorgesehen.
Ausführungsbeispiele der vorliegenden Erfindung werden nachfolgend anhand der beiliegenden Zeichnungen erläutert. Es zeigen:

Fig. 1 — ein schematisches Funksystem zur Illustration von dem Anwendungsgebiet;

Fig. 2a und 2b — ein schematisches Schaubild zur Illustration von kooperativer Kommunikation;

Fig. 3a und 3b — ein schematisches Schaubild zur Illustration von kooperativer Kommunikation unter Verwendung von Network Coding;

Fig. 4 — ein schematisches Diagramm zur Erläuterung einer Berechnung beim Network Coding;

Fig. 5 — ein schematisches Diagramm zur Erläuterung der Inhalte eines Headers beim Network Coding;

Fig. 6a — eine schematische Darstellung eines Kommunikationssystems zur Erläuterung eines Basisausführungsbeispiels;

Fig. 6b — eine schematische Darstellung eines Headers gemäß einem Basisausführungsbeispiel;

Fig. 7a-7i — schematische Darstellungen zur Erläuterung des Zusammenspiels von Request-Liste, Scheduling-Tabelle und Codiermatrix, um entsprechend Ausführungsbeispielen eine Transmission-Matrix zu codieren bzw. zu decodieren;

Fig. 8 — eine schematische Darstellung zur Illustration eines Vorgangs innerhalb eines Funkknotens zu Beginn eines Kommunikationszyklus gemäß einem erweiterten Ausführungsbeispiel;

Fig. 9 — ein schematisches Blockschaltbild zur Illustration von Vorgängen innerhalb eines Funkknotens zu Beginn eines Kommunikationsvorgangs gemäß einem erweiterten Ausführungsbeispiel;

Fig. 10 — ein schematisches Blockschaltdiagramm zur Illustration von Vorgängen innerhalb eines Funkknotens im Sendefall gemäß einem erweiterten Ausführungsbeispiel;

Fig. 11 — ein schematisches Blockdiagramm zur Illustration von Vorgängen innerhalb eines Funkknotens im Empfangsfall gemäß erweiterten Ausführungsbeispielen; und

Fig. 12 — ein schematisches Blockdiagramm zur Illustration von Vorgängen innerhalb eines Funkknotens im Ende eines Kommunikationszyklus gemäß einem erweiterten Ausführungsbeispiel.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar beziehungsweise austauschbar ist.

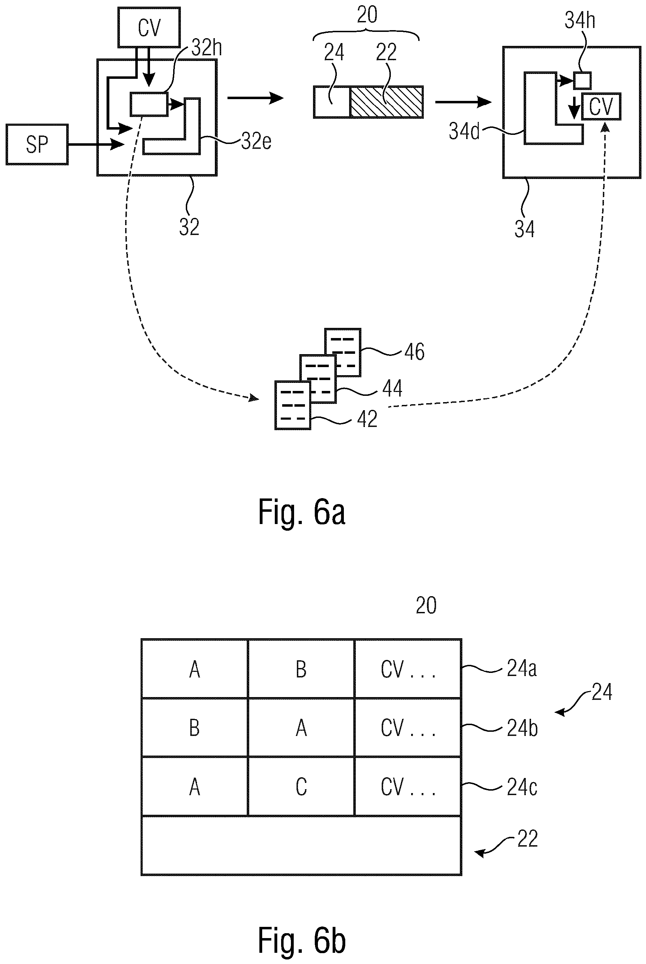

Fig. 6a zeigt ein Kommunikationsnetzwerk 30 mit einem Sender 32 sowie einem Empfänger 34. Der Sender 32 sendet das codierte Datenpaket 20 an den Empfänger 34.

Der Sender 32 umfasst einen Header-Generator 32H sowie einen Network-Coding-Encoder 32e. Der Network-Encoder 32e ist ausgebildet, ein Source-Paket SP unter Verwendung von Codier-Koeffizienten zu decodieren, um ein codiertes Datenpaket zu erhalten. Beim Codieren können zwei oder mehrere Source-Datenpakete SP miteinander gefaltet werden, sodass die zwei oder mehreren in dem codierten Paket zusammengefassten Pakete in einer gemeinsamen Ressource übertragen werden. Eine Trennung der mehreren Pakete erfolgt auf Seiten des Empfängers 34 unter Verwendung der verwendeten Codiervektoren CV. Durch diesen Ansatz ist möglich mit "einer" Ressource mehrere Datenpakete (z.B. von mehreren Quellen) zu mehreren Senken weiterzuleiten.

Die Codier-Koeffizienten erhält der oder die Empfänger 34 beispielsweise über den Codiervektor CV. Dieser Codiervektor CV wird auch in den Header integriert. Der Integriervorgang von CV in den Header 24 erledigt der Header-Generator 32H. Dieser Header 24 ist Teil des von dem Encoder 32e emittierten Datenpakets 20. Das Datenpaket 20 umfasst neben dem Header 24H noch das oder die codierten Datenpakete (vgl. Payload 22). An dieser Stelle sei angemerkt, dass der Encoder 32e mehrere Einheiten, wie zum Beispiel einen eigentlichen Decoder für die codierten Datenpakete 22 sowie einen Packer, der die codierten Datenpakete 22 und Header 24 zu dem Datenpaket 20 zusammenfügt, umfasst. An dieser Stelle sei angemerkt, dass die codierten Datenpakete 22 mehrere zu übermittelnden Source-Pakete umfassen kann. Beispielsweise kann ein Uplink von 32 nach 34 sowie Downlink von 34 nach 32 geplant sein. Auch können in dem gleichen Datenpaket mehrere zu übermittelnden Source-Pakete für mehr als die zwei dargestellten Kommunikationspartner 32 und 34 integriert sein. Beispielsweise kann der Sender 32 ein codiertes Datenpaket zu dem Empfänger 34 senden, während zusammen mit derselben codierten Datenpaket 22 ein weiteres codiertes Datenpakete für einen weiteren Empfänger (nicht dargestellt) enthalten ist.

Der Empfänger 34 empfängt das Datenpaket 20 und encodiert das Datenpaket 20 unter Verwendung des Decoders 34d. Hierfür verwendet der Encoder typischerweise den Codiervektor beziehungsweise die aus dem Codiervektor abgeleiteten Codier-Koeffizienten. Diese erhält er unter Zuhilfenahme des Headers. Dazu weist der Empfänger 34 einen Header-Decoder 34H auf, der aus dem Header 24 den relevanten Codiervektor CV extrahiert und dem Decoder 34d zur Verfügung stellt.

An dieser Stelle sei angemerkt, dass die Informationen im Header 24 reduziert übertragen werden, wie anhand von Fig. 6b gezeigt wird. Beispielsweise umfasst der Header weniger Informationen als eigentlich für die Übertragung notwendig sind. Entsprechend einer Variante kann in dem Header eine Information bezüglich der ein oder mehreren Datensenken (Empfänger) vorhanden sein. Optionaler Weise kann auch eine Information bezüglich der ein oder mehreren Datenempfänger vorhanden sein. Entsprechend einem Ausführungsbeispiel werden nicht die Codier-Koeffizienten in dem Header mitübertragen, sondern nur ein Codiervektor. Aus diesem sind dann die Codier-Koeffizienten ermittelbar, wie nachfolgend noch erläutert werden wird. Entsprechend einer Variante sind nur CV Indizes enthalten, die in einem Zusatzdatenpaket, z.B. einem im Vorfeld übertragene Information bzw. einer vorkonfigurierten Information, referenziert ist. Die vollständige für die Codierung / Decodierung benötigte Information ist unter Verwendung der vorkonfigurierten Information, wie z.B. der Request-Liste 42, Codiermatrix 44 und/oder Scheduling-Tabelle 46 ableitbar.

Deshalb kann entsprechend Ausführungsbeispielen das Verfahren den Schritt des Vorabaustauschens von vorkonfigurierten Informationen aufweisen. Ferner umfasst das Verfahren den Schritt des Ableitens einer weiteren Information aus einer dem Header entnommenen Information unter Verwendung der vorkonfigurierten Informationen.

D.h. also dass entsprechend einem weiteren Ausführungsbeispiel sowohl der Header-Generator 32H als auch der Header-Decoder 34H für das Generieren und Entpacken des Headers 22 und/oder auch der Header Encoder 34e für das Encodieren die vorkonfigurierte Informationen verwendet. Hierzu zählen beispielsweise die als optional gekennzeichneten Elemente Request-Liste 42, Codiermatrix 44 und/oder Scheduling-Tabelle 46. Diese Vorkonfigurierungen 42, 44 und 46 können im Vorfeld von dem Sender 32 an den Empfänger 34 übermittelt werden. Der Decoder 32d kann ebenfalls eine aus der vorkonfigurierte Informationen abgeleitet Information, nämlich den tatsächlich Codiervektor verwenden.

Wie bezüglich Fig. 6b gezeigt ist, weist das Datenpaket 20 einen Header 24 auf. Dieser Header 24 kann Informationen für drei zu übermittelnden Source-Pakete beispielsweise umfassen. Diese sind mit den Bezugszeichen 24A, 24B und 24C markiert. In der Payload / den codierten Datenpaketen werden alle Nutzdaten für die drei zu übermittelnden Source-Pakete dargestellt. In dem Bereich zugeordnet zu dem Source-Paket 24A ist beispielsweise eine Datenquelle A, eine Datensenke B sowie der entsprechende Kommunikationsvektor dargestellt. Für das zu übermittelnde Source-Paket 24B ist eine Datenquelle B, eine Datensenke A und der entsprechende Codiervektor enthalten. Wie zu erkennen ist, kann 24A einen Uplinkvorgang, während 24B einen Downlinkvorgang definieren kann. Bei 24C kann beispielsweise eine andere Datensenke C vorgesehen sein. Für jedes dieser zu übermittelnde Source-Paket, definiert über Datenquelle und Datensenke, ist ein jeweiliger Codiervektor zugeordnet. Durch die Verwendung des Codiervektors kann der Signalisierungsaufwand reduziert werden, da nun nicht mehr die entsprechenden Codier-Koeffizienten übermittelt werden müssen. Diese werden aus dem Codiervektor abgeleitet.

Entsprechend einem weiteren Ausführungsbeispiel kann statt A B beziehungsweise B A in den Headerteilen für die ersten zwei zu übermittelnde Source-Pakete auch nur die Information bezüglich der Senke B enthalten sein und weiter auch eine Information umfasst werden, dass es sich bei dem zu übermittelnden Source-Paket um einen Uplink- und beim anderen zu übermittelnden Source-Paket um einen Downlinkvorgang handelt. Hierbei basiert das Ganze auf der Annahme, dass der Header aus Sicht des Kommunikationspartners A geschrieben ist. In diesem Fall würde dann der Datentransfer C durch Informations "Uplink" und Datensenke C definiert sein. Entsprechend weiteren Ausführungsbeispielen wäre es auch denkbar, dass gar keine Information über den Codiervektor enthalten ist, sondern der Codiervektor beispielsweise aus einer Codiermatrix ableitbar ist, wobei die Codiermatrix Informationen bezüglich der verwendeten Codiervektoren zugeordnet zu Kommunikationsvorgängen (durchnummerierten Kommunikationsvorgängen) oder zugeordnet zu Kommunikationspartnern (beispielsweise Datensenke) umfasst. An dieser Stelle sei angemerkt, dass z.B. die CV Indizes und/oder Requests den Spalten der Codiermatrix und die KVs den Spalten zugeordnet sein können.

Durch diese weiteren Maßnahmen kann der Inhalt des Headers weiter reduziert werden. Dieser Ansatz wird nachfolgend im Detail erläutert, wobei an dieser Stelle schon darauf hingewiesen ist, dass beliebige Kombinationen an vorkonfigurierten Informationen und übermittelten Informationen möglich ist. Allen Vorgängen ist gemein, dass der Header weniger Information enthält, wie eigentlich für die Codierung/Übermittlung notwendig wäre, wobei die fehlende Information aus anderen Informationsblöcken des Headers abgeleitet oder unter Verwendung von vorkonfigurierten Informationen abgeleitet ist.

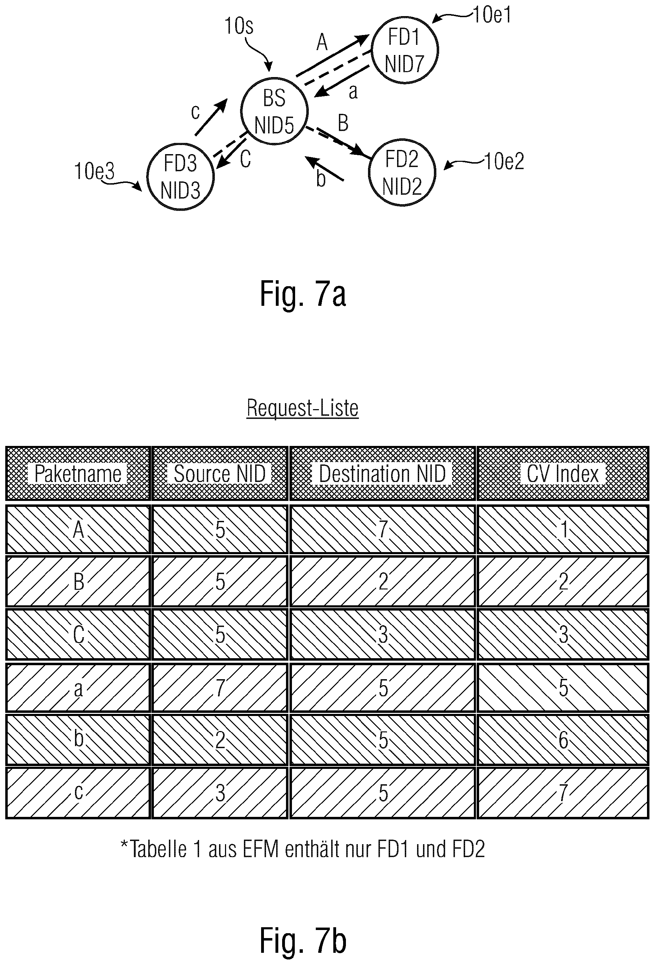

Fig. 7a ist durch die Kommunikationsverbindung zwischen einer Basisstation 10S und drei Knoten 10E1-10E3. Die Basisstation 10S hat die NID 5, die Empfänger 10E1-10E3 sind mit den NIDs 7, 2 und 3 nummeriert. Die Kommunikationsverbindung zwischen den jeweiligen Elementen sind mit Großbuchstaben A, B und C für den Downlink und a, b und c für den Uplink markiert.

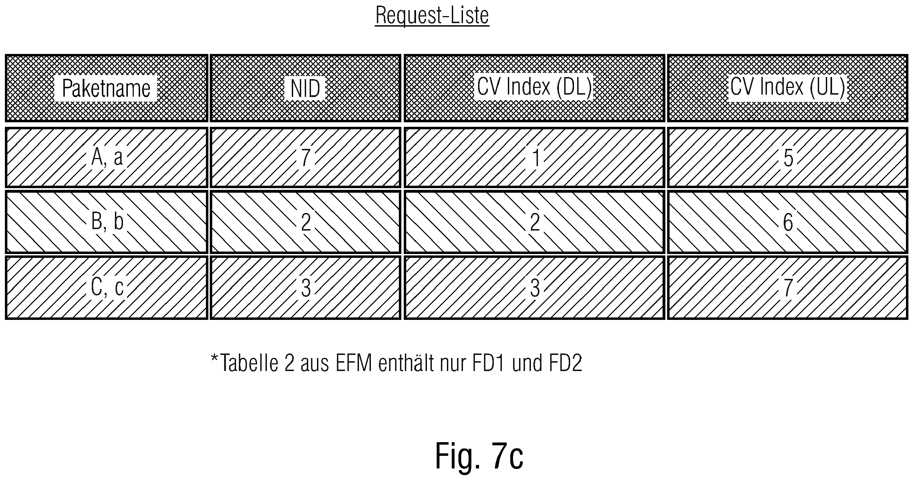

Für nachfolgende Diskussion sei davon ausgegangen, dass alle sechs potenziellen Übertragungen A, B, C, a, b und c angefragt werden (vgl. Request). Diese Requests werden in einer Request-Liste, wie in Fig. 7b dargestellt ist, übernommen. Hier in dieser Request-Liste aus Fig. 7b sind alle in Fig. 7a markierten Übertragungen zugeordnet zu Quelle und Senke (Source-NID und Destination-NID) aufgetragen. Ferner sind in dieser Request-Liste den Übertragungen A, B, C, a, b, c Codiervektoren CV, hier anhand von Codiervektorindizes zugeordnet. An dieser Stelle sei angemerkt, dass ein Codiervektorindex eine Referenzierung in einem entsprechenden Codiervektor darstellt. Die Codiervektorindizes sind von 1 bis 7 entsprechend der Reihenfolge in der Request-Liste durchnummeriert. Entsprechend einer Variante kann die Request Liste auch komprimiert dargestellt werden, wie im Zusammenhang mit Fig. 7c gezeigt ist.

Bei der Weiterentwicklung von Fig. 7c wird davon ausgegangen, dass eben eine Kommunikation mit der Basisstation 10S erfolgt. In diesem Fall reicht es, wenn nur der andere Kommunikationsknoten als NID angegeben wird und je nach Uplink oder Downlink (vgl. A, B und C bzw. a, b und c), der entsprechende CV-Index referenziert wird.

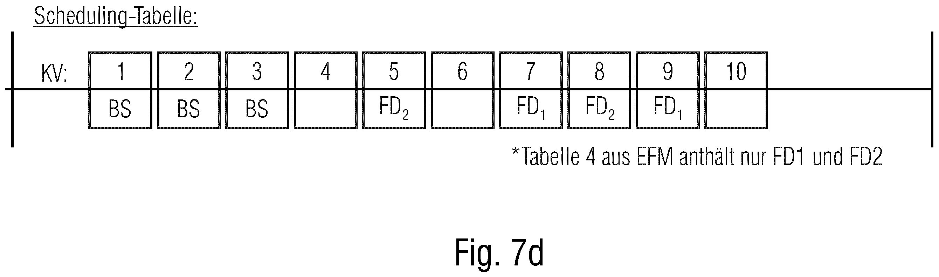

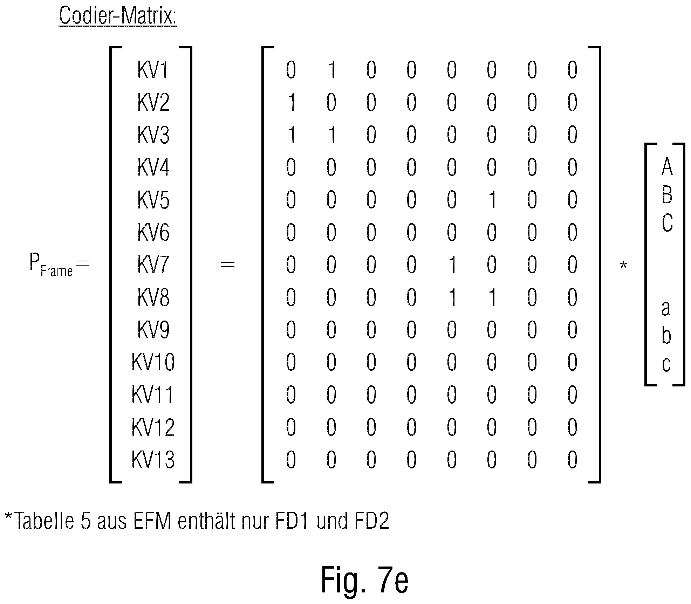

Diese in Fig. 7c dargestellte Liste ist für einen Kommunikationsvorgang, das heißt also für einen Zeitslot, gültig. Entsprechend Ausführungsbeispielen können mehrere Kommunikationsvorgänge in aufeinanderfolgenden Zeitslots erfolgen. Diese sind beispielhaft in der Scheduling-Tabelle aus Fig. 7d dargestellt. Hier ist exemplarisch illustriert, dass in den ersten drei Kommunikationsvorgängen die Basisstation sendet, während in den Kommunikationsvorgängen 7, 8 und 9 jeweils die Kommunikation aus Sicht einer der Knoten 10E1-10E3 betrachtet wird. Über diese Vielzahl von zeitlich aufeinanderfolgenden Kommunikationsvorgängen kann der entsprechende Codiervektor oder auch ein Codiervektorindex mitberücksichtigt werden, der z.B. in der Codiermatrix referenziert ist. Die Codiermatrix ist in Fig. 7e gezeigt.

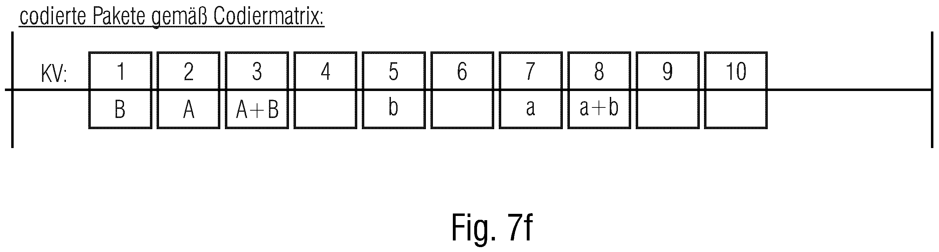

Die Codiermatrixillustriert über die einzelnen Kommunikationsvorgänge KV1-KV13 den jeweiligen Wert für den entsprechenden Übertragungsvorgang A, B, C, a, b, c. Beispielsweise wird im Kommunikationsvorgang KV1 eine Downlink-Übertragung B durchgeführt, während im Kommunikationsvorgang KV2 eine Downlink-Übertragung A durchgeführt wird (vgl. Fig. 7a). Das Ergebnis ist in Fig. 7f dargestellt, das die codierten Pakete gemäß der Codiermatrix über die entsprechenden Kommunikationsvorgänge 1-10 darstellt. Unter Berücksichtigung dieser Codiermatrix kann dann je Kommunikationsvorgang ein Header ermittelt werden, der insgesamt einen reduzierten Inhalt hat.

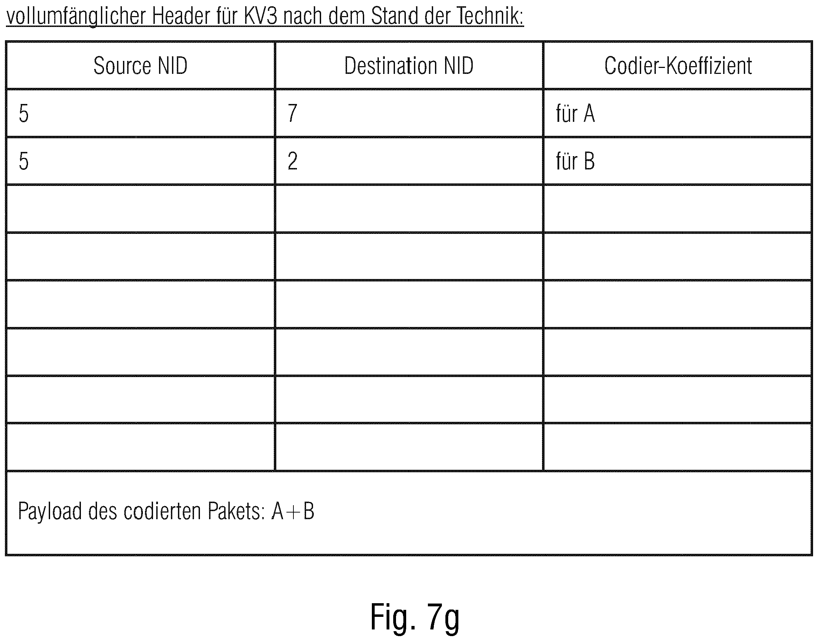

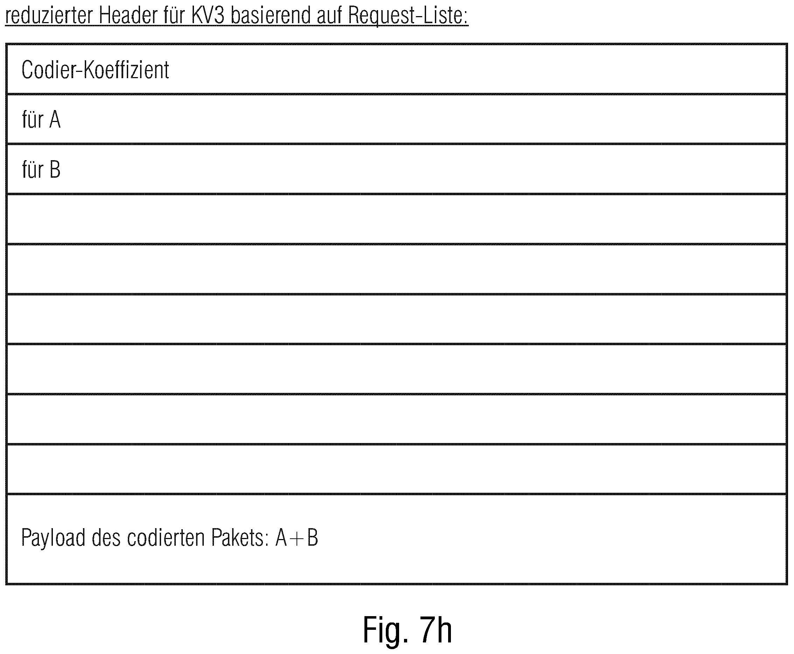

Der typischerweise zu übertragende vollumfängliche Header für Kommunikationsvorgang KV3 ist in Fig. 7g illustriert. Beim Kommunikationsvorgang KV3 wird die Kommunikation A und B ermöglicht (vgl. Fig. 7e bzw. 7f) und zwar aus Sicht der Basisstation (vgl. Scheduling-Tabelle aus Fig. 7d). Insofern ergibt sich also als Source-NID jeweils die 5 und als Destination-NID die 7 bzw. die 2. Die entsprechenden Codierkoeffizienten für A und B sind 1, wie sich aus Fig. 7e ergibt. Dieser vollumfängliche Header aus Fig. 7g kann entsprechend Ausführungsbeispielen durch die Verwendung von den vorkonfigurierten Informationen Requestliste, Schedulingliste und/oder Codiermatrix reduziert werden, wie beispielsweise in Fig. 7h gezeigt ist.

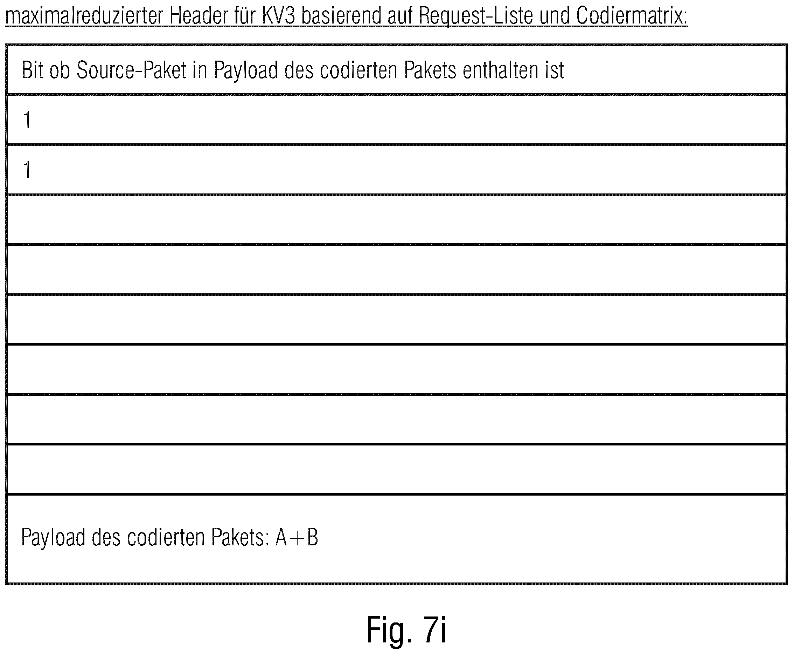

Fig. 7h zeigt einen reduzierten Header, bei welchem ausgehend von der ersten Request-Liste aus Fig. 7b die Codierkoeffizienten bzw. CV-Indizes eingefügt sind. Insofern kann entsprechend einer ersten Komprimierungsstufe der Header durch Verwendung der Request-Liste dahin gehend verkleinert werden, da weder Quelle noch Senke in diesem enthalten sein muss. Eine weitere Verkleinerung ist möglich, wie in Bezug auf Fig. 7i gezeigt ist.

Fig. 7i verwendet neben der Request-Liste auch noch die Codiermatrix, so dass nur noch mit einem Bit angegeben werden muss, ob ein entsprechendes Datenpaket enthalten ist oder nicht.

Wie oben bereits erwähnt, zählt zu den vorkonfigurierten Informationen beispielsweise die Request-Liste, eine Scheduling-Tabelle und/oder eine Codiermatrix. Nachfolgend wird auch auf Beispiele für derartige vorkonfigurierte Informationen im Detail eingegangen.

Request-Liste

Ein Request bezieht sich auf ein Source-Datenpaket welches von einem Funkknoten als Datenquelle (Source) zu einem Funkknoten als Datensenke (Destination) übertragen werden soll. Source/Destination werden über ihre Knotenidentität beschrieben. Mehrere Datenpakete zwischen gleichen Source/Destination-Funkknoten werden als mehrere Requests gehandhabt. Hieraus kann eine Request-Liste mit Requestindizes generiert werden. An dieser Stelle sei angemerkt, dass der Request typischerweise auf anwendungsebene definiert ist.

Jedem Request wird ein Index im Codiervektor (CV) eineindeutig zugeordnet. An der durch den CV-Index beschriebenen Stelle wird der Codier-Koeffizient eingetragen.

Ausführungsbeispiel Request-Liste1 beliebige Kommunikation zwischen Funkknoten:

- Der Codier-Koeffizient $C_{N1D5->NID2}$ für Datenpaket von Quelle NID5 zu Senke NID2 wird unter CV-Index 2 signalisiert
- Der Codier-Koeffizient $C_{N1D2->NID5}$ für Datenpaket von Quelle NID2 zu Senke NID5 wird unter CV-Index 6 signalisiert

Tabelle 1: Request-Liste mit beliebigen Funkknoten als Source/Destination

| Source NID | Destination NID | CV Index |
|---|---|---|
| 5 | 2 | 2 |
| 2 | 5 | 6 |
| 5 | 7 | 1 |
| 7 | 5 | 5 |
|  |  |  |
|  |  |  |

Ausführungsbeispiel Request-Liste 2 Kommunikation zwischen einem festen Funkknoten als Basisstation und weiteren Funkknoten:
Findet der Request nur zwischen einem festen Funkknoten (Basisstation BS) und Funkknoten statt (also keine Funkknoten zu Funkknoten-Kommunikation), kann an Stelle von Src/Dest auch von UL/DL gesprochen werden.

Tabelle 2: Request-Liste mit einem festen Funkknoten als Basisstation und weiteren Funcknoten

| NID | CV Index für DL | CV Index für UL |
|---|---|---|
| 2 | 2 | 6 |
| 7 | 1 | 5 |
|  |  |  |
|  |  |  |

Der CV-Index kann entsprechend Ausführungsbeispielen auch direkt aus der NID abgeleitet werden. Dieses Verfahren bietet sich an, wenn die Anzahl der teilnehmenden Knoten klein ist und die NID fortlaufend nummeriert im Netz vergeben sind, damit alle Positionen im CV besetzt sind.
Ausführungsbeispiel Request-Liste 3 Request Liste bei der der Index im Coding Vektor CV durch die NID bestimmt wird (CV Index = NID*2-1 für Uplink, CV Index = NID*2 für Downlink).

Tabelle 3: Request-Liste mit einem festen Funkknoten als Basisstation und weiteren Funcknoten und Verknüpfung zwischen NID und CV-Index

| CV Index | NID |
|---|---|
| 1 | 1 Uplink |
| 2 | 1 Downlink |
| 3 | 2 Uplink |
| 4 | 2 Downlink |
| 5 |  |
| 6 |  |
| 7 |  |
| 8 |  |

Oben genannte Request-Listen haben gemein, dass für ein Kommunikationspartnerpaar, z. B. definiert über eine Senke in Kombination mit einer Flussrichtung oder für eine Datenquelle in Kombination mit einer Datensenke, ein Codiervektor angegeben oder referenziert wird.

Scheduling-Liste

Die Scheduling-Tabelle beschreibt die zeitliche Abfolge von Kommunikationsvorgängen (KV) innerhalb eines endlichen Zeitrahmens und legt die Art der Beteiligung der einzelnen FK an den jeweiligen KV fest. Die KV werden fortlaufend (1, 2, ..., $n_{KV}$) nummeriert, wobei $n_{KV}$ die Gesamtzahl aller KV in der Scheduling-Tabelle bezeichnet. Eine in einem TDMA-System bereits vorhandene Zuordnung zwischen Sendeslots und FK kann übernommen werden.

Beispiel:

Tabelle 4: Scheduling-Tabelle mit Angabe des sendenden Funkknotens

| KV | Source NID |
|---|---|
| 1 | 5 |
| 2 | 5 |
| 3 | 5 |
| 4 | |
| 5 | 2 |
| 6 | |
| 7 | 7 |
| 8 | 2 |
| 9 | 7 |
| 10 | |
| ... | |
| $n_{KV}$ | |

Die Scheduling-Liste ermöglicht sozusagen Kommunikationsvorgänge in einer zeitlichen Reihenfolge zuzuordnen. Die Kommunikationsvorgänge werden beispielsweise anhand der Datenquellen identifiziert.

Coding Matrix

Die Codiermatrix legt fest, welches Source-Datenpaket gemäß Request-Liste in das codierte Paket eines bestimmten KV codiert werden soll.

Tabelle 5: Coding Matrix

| KV | CV Index 1 | CV Index 2 | CV Index 3 | CV Index 4 | CV Index 5 | CV Index 6 | CV Index 7 | CV Index 8 |
|---|---|---|---|---|---|---|---|---|
| 1 | | 1 | | | | | | |
| 2 | 1 | | | | | | | |
| 3 | 1 | 1 | | | | | | |
| 4 | | | | | | | | |
| 5 | | | | | | 1 | | |
| 6 | | | | | | | | |
| 7 | | | | | 1 | | | |
| 8 | | | | | 1 | 1 | | |
| 9 | | | | | | | | |
| 10 | | | | | | | | |
| | | | | | | | | |
| $n_{KV}$ | | | | | | | | |

"1" kennzeichnet hier einen von null verschiedenen Codier-Koeffizienten, das heißt die Information des entsprechenden Source-Pakets soll im codierten Paket enthalten sein. Der für die Gewichtung des Source-Pakets tatsächlich verwendete Codier-Koeffizient, kann bei systematischem linearen Network Coding in der Coding-Matrix angegeben werden (statt "1" dann eben mit "1" bis "$2^g-1$" in Abhängigkeit der Galois-Feld-Größe). Alternativ kann ein beliebiger, pro KV neu gewählter Codier-Coeffizient verwendet werden. Damit lässt sich ein Random Linear Network Coding effizient signalisieren. Bei diesem Verfahren werden die Codier-Koeffizienten mit Zufallsverfahren erzeugt.

Bevorzugter Weise werden die drei vorkonfigurierten Informationen Codiermatrix, Scheduling-Tabelle und Request-Liste zusammen angewendet, wie nachfolgend erläutert wird.

Bspw. ergibt sich für KV 3:

- Laut Scheduling-Tabelle (
  Tabelle 4) sendet Funkknoten NID5 / BS
- Laut Coding-Matrix (
  Tabelle 5) sollen Source-Pakete an CV Index Positon 1 und CV Index Position 2 in das Coded Packet codiert werden
- Laut Request-Liste (Tabelle 1 / Tabelle 2) sind das die Pakete von "NID5 / BS an NID7" und "NID5 / BS an NID2"

Entsprechend Ausführungsbeispielen kann mit den drei Listen als Datengrundlage in jedem Knoten (Datenquelle, Datensenke oder Relais) das codierte Paket komprimiert übertragen werden. Hieraus ergibt sich dann beispielsweise folgendes komprimiertes Datenpaket:

| |
|---|
| Coeff CV Index 1 |
| Coeff CV Index 2 |
| Coeff CV Index 3 |
| Coeff CV Index 4 |
| Coeff CV Index 5 |
| Coeff CV Index 6 |
| Coeff CV Index 7 |
| Coeff CV Index 8 |
| Payload Coded Data |

NCC-Header-Länge wäre dann Coeff-Länge (entsp. der Galois-Feld-Dimension), bspw. 4 Bit.

Bei bspw. 1 Basisstation mit 4 Funkknoten sind 8 Coeff-Infos notwendig: 32 Bit gepackt = 4 Octets (statt 12 Octets des allgemeingültigen Headers).

Entsprechend weiteren Ausführungsbeispielen kann das eben beschriebene beispielhafte Konzept erweitert werden, wie hier anhand der erweiterten Codiermatrix erläutert wird. Es wird davon ausgegangen, dass für systematisches lineares Network Coding eine Codiermatrix mit festen Codier-Koeffizienten verwendet wird. Diese sind in nachfolgender Tabelle eingetragen:

| KV | CV Index 1 | CV Index 2 | CV Index 3 | CV Index 4 | CV Index 5 | CV Index 6 | CV Index 7 | CV Index 8 |
|---|---|---|---|---|---|---|---|---|
| 1 | | $Coeff_{12}$ | | | | | | |
| 2 | $Coeff_{21}$ | | | | | | | |
| 3 | $Coeff_{31}$ | $Coeff_{32}$ | | | | | | |
| 4 | | | | | | | | |
| 5 | | | | | | $Coeff_{56}$ | | |
| 6 | | | | | | | | |
| 7 | | | | | $Coeff_{75}$ | | | |
| 8 | | | | | $Coeff_{85}$ | $Coeff_{86}$ | | |
| 9 | | | | | | | | |

(fortgesetzt)

| KV | CV Index 1 | CV Index 2 | CV Index 3 | CV Index 4 | CV Index 5 | CV Index 6 | CV Index 7 | CV Index 8 |
|---|---|---|---|---|---|---|---|---|
| 10 | | | | | | | | |
| | | | | | | | | |
| $n_{KV}$ | | | | | | | | |

"Coeffxy" bedeutet, dass für den KV x das Source-Paket das an der Stelle des CV Index y referenziert wird mit diesem Codier-Coeffizienten gewichtet werden soll.

Im komprimierten, codierten Paket muss dann nur noch angegeben werden, ob das entsprechende Source-Paket tatsächlich enthalten ist, was der logischen Information 1 bit entspricht.

| |
|---|
| Coeff CV Index 1 enthalten |
| Coeff CV Index 2 enthalten |
| Coeff CV Index 3 enthalten |
| Coeff CV Index 4 enthalten |
| Coeff CV Index 5 enthalten |
| Coeff CV Index 6 enthalten |
| Coeff CV Index 7 enthalten |
| Coeff CV Index 8 enthalten |
| Payload Coded Data |

NCC-Header Länge wäre dann nur noch die Anzahl der Codier-Koeffizienten in Bit. Bei bspw. 1 Basisstation mit 4 Funkknoten sind 8 Coeff-Infos notwendig: 8 Bit gepackt = 1 Octet (statt 12 Octets des allgemeingültigen Headers).

Entsprechend weiteren Ausführungsbeispielen ist eine Erweiterung der Request-Liste durch eine Clusterung denkbar. Sind viele Funkknoten im System vorhanden ergeben sich für NCC Konsequenzen:

- Der CV wird lang, was Header-Overhead erzeugt
- Die Verarbeitungsdauer für En- und vor allem Decodieren steigt stark an.

Um das zu vermeiden, können Cluster gebildet werden.

| Source NID | Destination NID | CV Cluster (optional) | CV Index |
|---|---|---|---|
| BS | 2 | 1 | 2 |
| 2 | BS | 1 | 6 |
| BS | 7 | 1 | 1 |
| 7 | BS | 1 | 6 |
| | | | |
| | | | |
| BS | 9 | 2 | 2 |
| 9 | BS | 2 | 6 |
| | | | |

Die Tabelle aus Beispiel 1 wurde um Cluster erweitert. Dadurch können die CV-Indizes pro Cluster vergeben werden.

Auch entsprechend weiteren Ausführungsbeispielen kann die Scheduling-Tabelle erweitert werden. Scheduling-Tabelle mit Destination NID Angabe. Hierdurch kann Overhearing eingeschränkt werden, bspw. um Energie zu sparen.

Beispiel:

| KV | Source NID | Destination NID |
|---|---|---|
| 0 | | |
| 1 | BS | 2 |
| 2 | BS | 7 |
| 3 | BS | Broadcast |
| 4 | | |
| 5 | 2 | Broadcast |
| 6 | | |
| 7 | 7 | Broadcast |
| 8 | 2 | BS |
| 9 | 7 | BS |
| 10 | | |
| | | |
| $n_{KV}$ | | |

Entsprechend weiteren Ausführungsbeispielen sind diese erweiterten Elemente Scheduling-Tabelle, Request-Liste und Codiermatrix entweder zusammen oder jede für sich in Kombination mit den Basisvarianten einsetzbar.
Nachfolgend wird das konkrete Verfahren unter oben erläuterter Lehre anhand eines weiteren Beispiels erläutert. Bei dem Verfahren wird im Prinzip zwischen einer Konfigurationsphase und einer Betriebsphase unterschieden.

Konfigurationsphase

Zum Betrieb des Kommunikationssystems werden alle FKs des Kommunikationssystems anhand der Konfigurationsinformationen, insbesondere Request-Liste, Scheduling-Tabelle und Codiermatrix, konfiguriert. Eine Konfigurationsphase vor der Betriebsphase (Initialisierung) oder zwischen Betriebsphasen bei Änderungen in der Netzwerktopologie (Umkonfiguration) kann entsprechend Ausführungsbeispielen vorgesehen sein. Zur Konfiguration kann die Funkkommunikation zwischen den Knoten genutzt werden. Hierdurch erhält jeder FK dann die entsprechenden Konfigurationsparameter (Request-Liste, Scheduling-Tabelle und Codiermatrix).

Betriebsphase

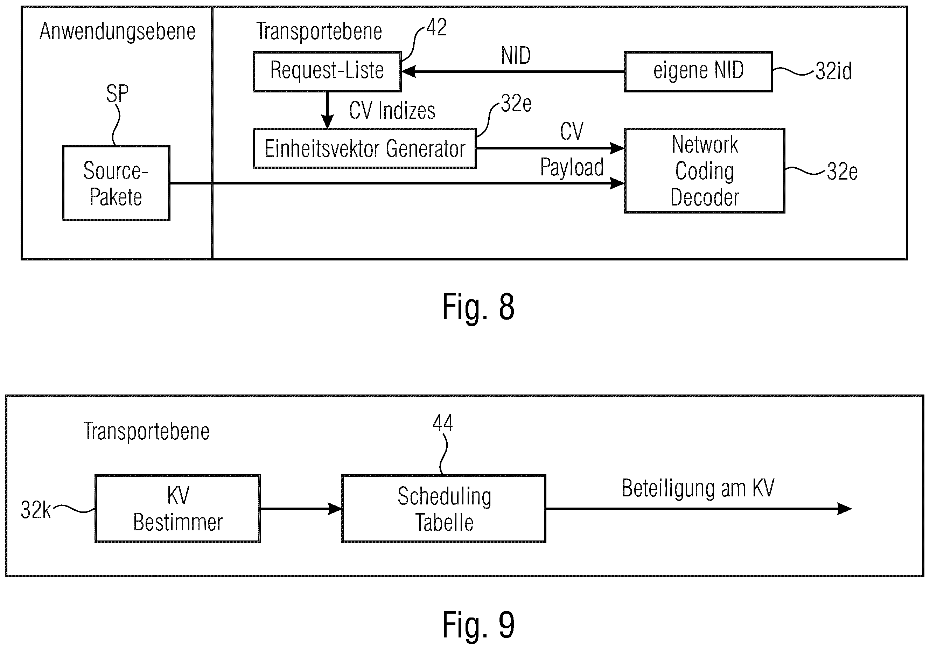

Es wird davon ausgegangen, dass die Kommunikation in Zyklen erfolgt. Innerhalb eines Zyklus kommt es zu mehreren Komplikationsvorgängen, wobei jede FK intern die Anzahl der bereits abgeschlossenen KV innerhalb eines Zyklus bestimmt, beispielsweise durch einen internen Zähler oder einen Timer. Zu Beginn eines Zyklus wird der Zustand des Network-Coding-Encoder/Decoders zurückgesetzt, so dass diese keine codierten Pakete aus vorherigen Kommunikationszyklen mehr enthalten. Anschließend prüft jeder FK anhand seiner NID, welche Quellpakete dieser gemäß Request-Liste innerhalb dieses Zyklus aussenden soll. Jedes auszusendende Quellpaket wird gemeinsam mit dem $i$-ten Einheitsvektor $e_i$ als CV in einen Network-Coding-Decoder eingespeist, wobei $i$ dem CV-Index des Requests entspricht. Das ist exemplarisch anhand von Fig. 8 illustriert.
Fig. 8 zeigt die an dem Sendevorgang beteiligten Einheiten je auch getrennt nach einer Anwendungsebene und einer Transportebene. Aus Paket SP wird durch den Network-Coding-Encoder 32e in der Transportebene decodiert. Dieser erhält hierfür von dem Einheitsvektorgenerator 32EV die Codiervektoren CV. Als Input können Codiervektorindizis aus der Request-Liste verwendet werden, wobei als Inputparameter für die Request-Liste die 42 die eigene NID 32-ID steht. Das heißt also, dass mit der eigenen NID aus der Request-Liste der entsprechenden CV Indizes enthalten wird, wobei der Einheitsvektorgenerator 32E den Codiervektor herleitet. Entsprechend Ausführungsbeispielen kann der Einheitsvektorgenerator 32E hier für die Codiermatrix 46 genutzt werden.

Zu Beginn eines KV prüft jeder FK ob er gemäß Scheduling-Tabelle aktiv (Senden), passiv (Empfangen) oder weder aktiv noch passiv (nur im Falle von Erweiterung 2/3) an dem KV beteiligt ist (vgl. Fig. 9).

Fig. 9 illustriert noch einmal die Transportebene und zwar bei Anwendung der Scheduling-Tabelle durch den KV-Bestimmer 32.

Hierdurch ergibt sich also folgender Vorgang mit den Schritten 1 bis 5 und den optionalen Schritten 4A und 4B

Bei aktiver Beteiligung werden die folgenden Prozesse auf einem FK ausgeführt:

1. Auslesen des für den aktuellen KV gewünschten (entspricht erwartet oder geplant, je nach Sichtweise (Sicht Empfänger: erwartet. Sicht Sender: geplant, hier im Sinne "geplant") CV aus der Codiermatrix

2. Network-Coding-Encoder prüft, ob dem FK die zu den CV-Indizes des gewünschten CV zugehörigen Quellpakete bekannt sind. Für alle CV-Indizes mit zugehörigen bekannten Quellpaketen stimmen die Codier-Koeffizienten des tatsächlichen und des gewünschten CV überein. Für alle CV-Indizes mit zugehörigen nicht bekannten Quellpaketen wird den Codier-Koeffizienten des tatsächlichen CV der Wert null zugewiesen (z.B. wenn ein Paket nicht empfangen wurde und somit auch nicht weitergeleitet werden kann). Wenn beispielsweise die Übertragung von drei Source-Paketen mit den CV 513 geplant ist, das zweite Source-Paket allerdings nicht empfangen und damit auch nicht weitergeleitet werden kann, ergibt sich aus dem geplanten CV 513 und ein tatsächlicher CV von 503.

3. Network-Coding-Encoder berechnet die Payload eines codierten Pakets. Die Kodierung erfolgt anhand des tatsächlichen CV.

4. Header Encoder bildet einen Header aus dem tatsächlichen CV.

    a. Ohne Erweiterung 1 sind der Header und der tatsächlichen CV identisch.
    b. Mit Erweiterung 1 sind der Header und der in Erweiterung 1 beschriebene, komprimierte CV identisch.

Der Verpacker bildet aus dem Header und der Payload ein codiertes Paket.

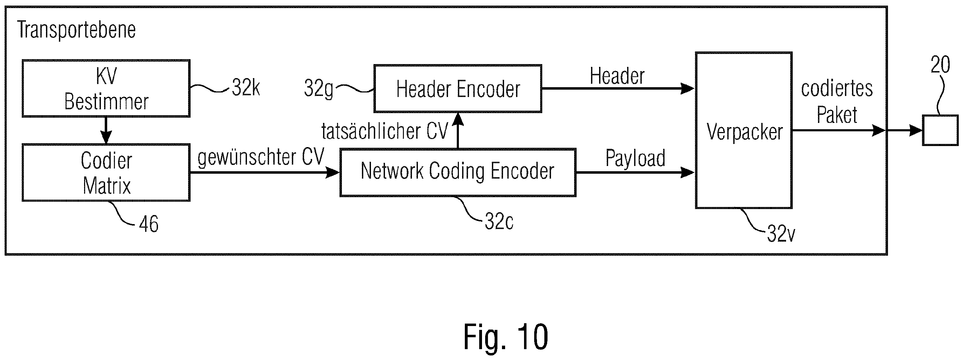

Dieser Vorgang ist zusammenhängend in Fig. 10 illustriert.

Fig. 10 zeigt noch eine Erweiterung der Transportebene mit dem Network-Encoder 32E. Dieser behält wiederum als Inputvektor einen Codiervektor, der z. B. aus der Codiermatrix 46 abgeleitet ist, wobei als Inputparameter für die Codiermatrix der KV-Bestimmer 32K dient. Durch diesen Encoder 32E wird dann die Payload entsprechend codiert und dem Verpacker 32V übergeben. Dieser kombiniert den Header von dem Header-Encoder beziehungsweise Header-Generator 32G mit der codierten Payload. Der Header-Encoder erhält als Inputparameter für den Header den verwendeten Codiervektor von dem Encoder 32E.

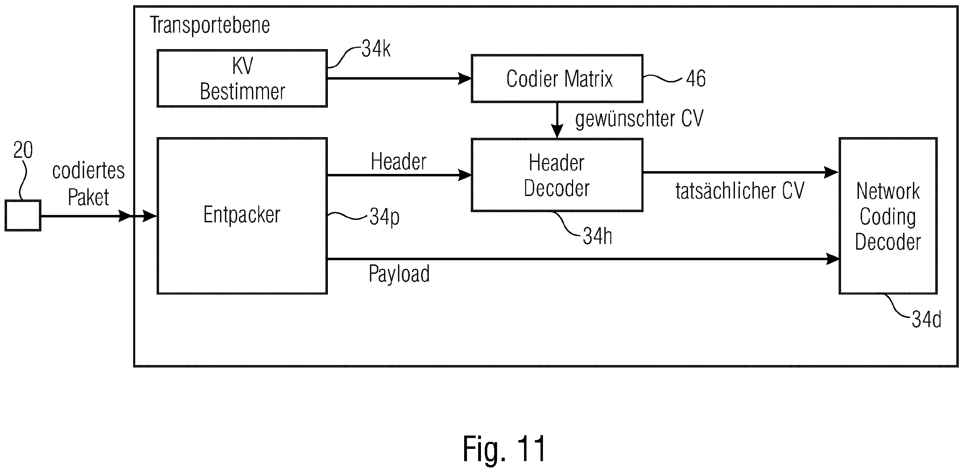

In Fig. 11 ist nun der Vorgang beim Empfangen des codierten Paketes 20 (vgl. Ausgang des Verpackers 32V) beziehungsweise Eingang (Entpacker 34P), der mit dem Decoder 34d verbunden ist, gezeigt.

Auf der Transportebene wird im Empfangsteil das Datenpaket 20 entpackt (vgl. 34P), wobei dann Header und Payload / codiertes Datenpaket getrennt voneinander den Decodern 34H und 34D zugeführt werden. Der Header-Decoder extrahiert den Codiervektor, der als Eingangsparameter für den Network-Coding-Decoder 34D dient. Als Eingangsparameter verwendet hierzu der Header-Decoder 34H die Codiermatrix 46, die wiederum als Eingangsparameter die Kommunikationsvorgangsnummer vom KV-Bestimmer 34K erhält.

Hierdurch ergibt sich also folgender Vorgang mit den vier Schritten 1 bis 4 und den optionalen Schritten 3A und 3B

Bei passiver Beteiligung werden die folgenden Prozesse auf einem FK ausgeführt:

1. Auslesen des für den aktuellen KV gewünschten CV (hier gewünschten im Sinne "erwartet") aus der Codiermatrix

2. Zerlegung eines codierten Pakets in einen Header und eine Payload.

3. Header Decoder rekonstruiert den tatsächlichen CV aus dem gewünschten CV und dem Header.

    a. Ohne Erweiterung 1 sind der tatsächliche CV und der Header identisch.
    b. Mit Erweiterung 1 wird der tatsächliche CV durch die elementweise Multiplikation von dem Header und dem gewünschten CV berechnet.

Network-Coding-Decoder verarbeitet den tatsächlichen CV zusammen mit der Payload.

Am Ende eines Kommunikationszyklus prüft entsprechend Ausführungsbeispielen jeder FK anhand der Request-Liste und seiner NID, welche Source-Pakete bzw. CV-Indizes für ihn bestimmt sind. Für jeden dieser CV-Indizes wird ein zugehöriger Einheitsvektor gebildet, wobei einem CV-Index $i$ der i-te Einheitsvektor $e_i$ zugeordnet ist. Die Einheitsvektoren werden sequentiell in den Network-Coding-Encoder eingespeist **(Fehler! Verweisquelle konnte nicht gefunden werden.** 12).

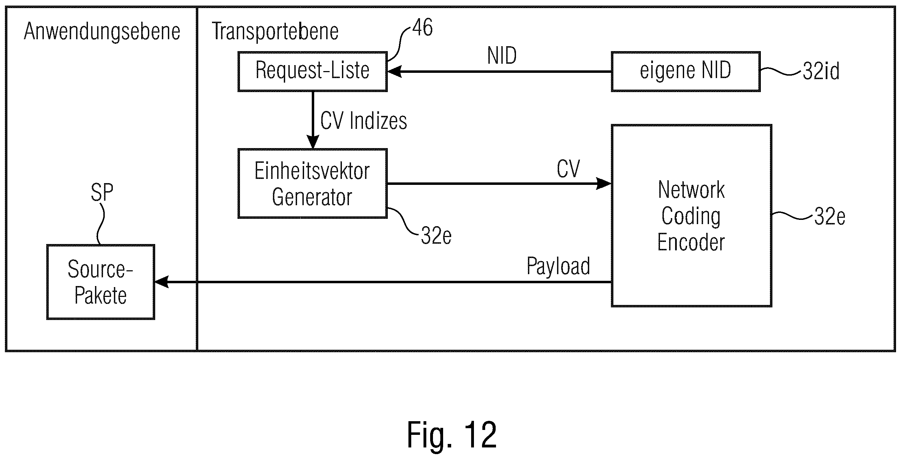

Fig. 12 zeigt also den Vorgang innerhalb eines FKs am Ende eines Kommunikationszyklus. Mittels der eigenen ID 32-ID erhält die Request-Liste 46 die NID, um hieraus den CV-Index zu bestimmen. Der Einheitsvektorgenerator 32E ermittelt auf Basis des CV-Index den Codierwert und stellt diesen dem Network-Coding-Encoder 32E zur Verfügung. Dieser encodiert hieraus die codierten Datenpakete zu dem Source-Paket und übergibt dieses Source-Paket SP der Anwendungsebene.

Jedes rekonstruierbare Source-Paket wird an die Anwendungsebene übermittelt. Nicht rekonstruierbare Source-Pakete verbleiben im Network-Coding-Encoder und werden zu Beginn des nächsten Kommunikationszyklus gelöscht.

Obiger Ansatz ist für Funkkommunikationssysteme, die deterministisch arbeiten anwendbar, um Echtzeitkommunikation zu unterstützen und hierbei eine niedrige Latenz zu erreichen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Interpretation des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.	Kommunikationsverfahren mit folgenden Schritten:

Übertragen von zumindest einem Datenpaket (20) mit einem Header (24) und ein codiertes Paket (22), wobei der Header (24) mindestens eine erste zur Interpretation des codierten Pakets relevante Information aus einer Gruppe enthält, wobei die Gruppe ein oder mehrere der folgenden Informationen umfasst:

- Information bezüglich ein oder mehrerer Quellen (32) des codierten Pakets (22) und Informationen bezüglich ein oder mehrerer Senken (34) des codierten Pakets (22) oder eine Information bezüglich ein oder mehrerer Quellen (32) oder Senken (34) des codierten Pakets (22) in Kombination mit einer Information bezüglich einer Übertragungsrichtung;
- Codiervektor (CV), wobei der Codiervektor (CV) separiert enthalten, integriert enthalten, vorgegeben oder referenziert ist, wobei dem Codiervektor (CV) Codier-Koeffizienten zugeordnet sind; und

Ableiten einer zweiten zur Interpretation des codierten Pakets relevanten Information der Gruppe aus der mindestens einen ersten Information unter Berücksichtigung einer vorkonfigurierten Information.

2.	Kommunikationsverfahren gemäß Anspruch 1, wobei die vorkonfigurierte Information Scheduling-Tabelle (44) und/oder einer Codiermatrix (46) und/oder einer Request-Liste (42) aufweist.

3.	Kommunikationsverfahren gemäß einem der vorherigen Ansprüche, wobei das Datenpaket (20) den Header (24) für ein oder mehrere zu übermittelnde Source-Pakete zwischen ein oder mehreren Quellen (32) und mehreren Senken (34) oder zwischen einer Quelle (32) und einer oder mehreren Senken (34) in unterschiedlichen Übertragungsrichtungen sowie das codierte Pakete (22) für die ein oder mehrere zu übermittelnde Source-Pakete aufweist; und/oder
wobei dem codierten Paket (22) ein Codiervektor (CV) zugeordnet ist; und/oder
wobei das zumindest eine Datenpaket (20) für zumindest zwei zu übermittelnde Source-Pakete umfassend eine Uplink-Übermittlung und eine Downlink-Übermittlung oder für zumindest zwei zu übermittelnde Source-Pakete zwischen unterschiedlichen Kommunikationspartnern verwendet wird.

4. Kommunikationsverfahren gemäß einem der vorherigen Ansprüche, wobei das Übertragen ausgehend von einem festen Kommunikationspartner (32) erfolgt, und/oder wobei der Header (24) nur eine Information bezüglich ein oder mehrerer weitere Kommunikationspartnern (34) für das codierte Paket (22) zusammen mit einer Übertragungsrichtung aufweist.

5. Kommunikationsverfahren gemäß Anspruch 2 oder einem der vorherigen Ansprüche mit Rückbezug auf Anspruch 2, wobei die Request-Liste (42) eine Information bezüglich der ein oder mehreren Quellen (32) und/oder Senken (34) für ein oder mehrere Source-Pakete aufweist; und/oder
wobei die Request-Liste (42) eine Zuordnung von den ein oder mehrerer Quellen (32) und/oder Senken (34) zu einem entsprechenden Codiervektor (CV) oder Codiervektor-Index, der auf einen Kodierkoeffizienten in dem Codiervektor (CV) referenziert, aufweist.

6. Kommunikationsverfahren gemäß einem der vorherigen Ansprüche, wobei der Schritt des Übertragens oder der Schritt des Übertragens und der Schritt des Ableitens für ein oder mehrere Kommunikationsvorgänge wiederholt wird oder in einer zeitlichen Abfolge wiederholt durchgeführt wird; oder wobei der Schritt des Übertragens oder der Schritt des Übertragens und der Schritt Ableitens für ein oder mehrere Kommunikationsvorgänge wiederholt wird oder in einer zeitlichen Abfolge wiederholt durchgeführt wird, wobei die zeitliche Abfolge durch eine Scheduling-Tabelle (44) festgelegt ist.

7. Kommunikationsverfahren gemäß Anspruch 6, wobei die zeitliche Abfolge und/oder die Scheduling-Tabelle (44) eine feste Zuordnung von Zeitslot zu der oder den jeweiligen Quellen (32) und/oder der oder den jeweiligen Senken (34) aufweist; und/oder
wobei die Scheduling-Tabelle (44) eine Angabe bezüglich eines festen Kommunikationspartners und einer zugehörigen Quelle (32) oder einer zugehörigen Senke (34) je Kommunikationsvorgang (KV) aufweist.

8. Kommunikationsverfahren gemäß einem der Ansprüche 6 bis 7, wobei der gewünschte Codiervektor (CV) oder ein Codiervektor-Index, der auf einen Kodierkoeffizienten in dem (gewünschte) Codiervektor (CV) referenziert, abhängig und/oder ableitbar von einer Nummerierung oder zeitlichen Abfolge ist; oder wobei der gewünschte Codiervektor (CV) abhängig oder ableitbar von einer Nummerierung oder zeitlichen Abfolge ist und der Zusammenhang in einer Codiermatrix (46) enthalten ist; und/oder
wobei eine Codiermatrix (46) einen Zusammenhang zwischen Kommunikationsvorgang (KV) und Kodierkoeffizienten für ein Source-Packet definiert; und/oder
wobei in der Codiermatrix eine feste Zuordnung eines jeweiligen festen Kodierkoeffizienten zu einem jeweiligen Kommunikationsvorgang und einem Codiervektorindex definiert ist.

9. Übertragungsverfahren gemäß Anspruch 8, wobei der Header (24) eine komprimierte Version des Codiervektors je Kommunikationsvorgang aufweist, aus welchem der Codiervektor (CV) je Kommunikationsvorgang ableitbar ist; und/oder
wobei der Header als Information bzgl. des Codiervektors (CV) eine Information dahingehend enthält, ob ein Source-Paket (zugeordnet zu einem Codiervektorindex) in dem Datenpaket (20) enthalten ist.

10. Kommunikationsverfahren gemäß einem der vorherigen Ansprüche, wobei die Request-Liste (42) um eine Zuordnung ergänzt wird, welche jedem Request ein Cluster zuordnet.

11. Kommunikationsverfahren gemäß einem der vorherigen Ansprüche, wobei vor dem Übertragen des zumindest einen Datenpakets (20) ein Verteilen zwischen den Kommunikationspartnern von vorkonfigurierten Informationen und/oder von Scheduling-Tabelle (44) und/oder Codiermatrix (46) und/oder Request-Liste (42) erfolgt.

12. Kommunikationsverfahren gemäß Anspruch 11, wobei auf Basis der Scheduling-Tabelle (44) und/oder Codiermatrix (46) und/oder Request-Liste (42) eine Konfiguration des Senders oder der Quelle und/oder des Empfängers oder der Senke erfolgt.

13. Kommunikationsverfahren gemäß einem der Ansprüche 11 oder 12, wobei die ausgetauschte Scheduling-Tabelle (44), Codiermatrix (46) und/oder Request-Liste (42) für mehrere Kommunikationsvorgänge gültig ist.

14. Kommunikationsverfahren gemäß einem der vorherigen Ansprüche, wobei das Kommunikationsverfahren ein Senden oder Weiterleiten umfasst oder durch einen Sender oder Relaisknoten durchgeführt wird, wobei das Senden oder Weiterleiten den Unterschritt des Codierens des codierten Paketes (22) unter Verwendung des Codiervektors (CV) und/oder das Generieren des Headers (24) umfasst; und/oder
wobei das Senden die folgenden Unterschritte umfasst:

Auslesen eines für den aktuellen Kommunikationsvorgang festgelegten Codiervektors (CV) aus einer Codiermatrix (46);
Prüfen und/oder Anpassen von Codier-Koeffizienten zugeordnet zu dem Codiervektor (CV);
Codieren eines Quellpakets unter Verwendung der Codier-Koeffizienten;
Generieren des Headers (24) unter Berücksichtigung des Codiervektors (CV),
Kombinieren des Headers (24) und des codierten Pakets (22) zu einem Datenpaket (20).

15. Kommunikationsverfahren gemäß einem der vorherigen Ansprüche, wobei das Kommunikationsverfahren den Schritt des Empfangens umfasst; oder
wobei das Kommunikationsverfahren den Schritt des Empfangens umfasst und der Schritt des Empfangens folgende Unterschritte aufweist:

Auslesen des für den aktuellen Kommunikationsvorgang definierten Codiervektors (CV) aus einer Codiermatrix (46);
Decodieren des codierten Pakets (22) unter Verwendung des Codiervektors (CV) und des empfangenen Headers (20).

16. Kommunikationsverfahren gemäß einem der vorherigen Ansprüche, wobei jeder Kommunikationsteilnehmer anhand vorkonfigurierten Informationen prüft, ob er an einem Kommunikationsvorgang, der das Übertragen umfasst, beteiligt ist.

17. Computerprogramm zur Durchführung des Kommunikationsverfahrens gemäß einem der vorherigen Ansprüche.

18. Datenpaket (20) mit einem Header (24) und einem codierten Paket (22), wobei der Header (24) mindestens eine erste zur Interpretation des codierten Pakets relevante Information aus einer Gruppe enthält, wobei die Gruppe ein oder mehrere der folgenden Informationen umfasst:

- Information bezüglich ein oder mehrerer Quellen (32) der ein oder mehreren codierte Pakete (22) und Informationen bezüglich ein oder mehrerer Senken (34) der ein oder mehreren codierte Pakete (22) oder eine Information bezüglich ein oder mehrerer Quellen (32) oder Senken (34) des codierten Pakets (22) in Kombination mit einer Information bezüglich einer Übertragungsrichtung;
- Codiervektor (CV), wobei der Codiervektor (CV) separiert enthalten, integriert enthalten oder vorgegeben ist, wobei dem Codiervektor (CV) Codier-Koeffizienten zugeordnet sind;

wobei eine zweite zur Interpretation des codierten Pakets relevante Information der Gruppe aus der mindestens einen ersten Information unter Berücksichtigung einer vorkonfigurierten Information ableitbar ist.

19. Kommunikationsteilnehmer, insbesondere Sender und/oder Empfänger, der ausgebildet ist, um zumindest ein Datenpaket (20) mit einem Header (24) und einem codierten Paket (22) zu übertragen, wobei der Header (24) mindestens eine erste zur Interpretation des codierten Pakets relevante Information aus einer Gruppe enthält, wobei die Gruppe ein oder mehrere der folgenden Informationen umfasst:

- Information bezüglich ein oder mehrerer Quellen (32) der ein oder mehreren codierte Pakete (22) und Informationen bezüglich ein oder mehrerer Senken (34) der ein oder mehreren codierte Pakete (22) oder eine Information bezüglich ein oder mehrerer Quellen (32) oder Senken (34) des codierten Pakets (22) in Kombination mit einer Information bezüglich einer Übertragungsrichtung;
- Codiervektor (CV), wobei der Codiervektor (CV) separiert enthalten, integriert enthalten oder vorgegeben ist, wobei dem Codiervektor (CV) Codier-Koeffizienten zugeordnet sind; und

wobei der Kommunikationsteilnehmer ausgebildet ist, um einer zweiten zur Interpretation des codierten Pakets relevanten Information aus der Gruppe aus der mindestens einen ersten Information unter Berücksichtigung einer vorkonfigurierten Information abzuleiten.

20. System mit zumindest einem Kommunikationsteilnehmer gemäß Anspruch 19, der als Sender fungiert und einem Kommunikationsteilnehmer gemäß Anspruch 19, der als Empfänger fungiert.

Funkknoten 1

10a

Funkknoten 2

10b

Funkknoten 3

10c

Funkknoten 4

10d

Funkknoten 5

10e

Fig. 1

Fig. 2a

$$b_{R_N} = \left| b_{R_{N_1}}, b_{R_{N_2}}, \ldots, b_{R_{N_M}} \right|$$

Fig. 2b

Fig. 3a

Fig.3b

Symbollänge g Bit

Source-Datenpaket 1

| D | A | T | A | 1 |

X   X   X   X   X

Codier-Koeffizient 1

| $C_1$ | $C_1$ | $C_1$ | $C_1$ | $C_1$ |

+   +   +   +   +

Source-Datenpaket 2

| D | A | T | A | 2 |

X   X   X   X   X

Codier-Koeffizient 2

| $C_2$ | $C_2$ | $C_2$ | $C_2$ | $C_2$ |

| $C_1$ | $C_2$ | Coded Data |

Codiervektor n*g Bit

# Fig. 4

Symbollänge g Bit

Source-Datenpaket von NID1 für NID2

| D | A | T | A | 1 |

X X X X X  } Kom1

Codier-Koeffizient 1

| $C_1$ | $C_1$ | $C_1$ | $C_1$ | $C_1$ |

+ + + + +

Source-Datenpaket von NID1 für NID7

| D | A | T | A | 2 |

X X X X X  } Kom2

Codier-Koeffizient 2

| $C_2$ | $C_2$ | $C_2$ | $C_2$ | $C_2$ |

24a  24b

20 ⤳ | NID1->2 | $C_1$ | NID1->7 | $C_2$ | Coded Data | ⤳ 22

24 ⌇ Header h Bit

Fig. 5

Fig. 6a

| A | B | CV . . . | 24a |
| B | A | CV . . . | 24b |
| A | C | CV . . . | 24c |
| | | | 22 |

Fig. 6b

10s

A

FD1
NID7

10e1

a

c

BS
NID5

B

FD3
NID3

C

b

FD2
NID2

10e2

10e3

## Fig. 7a

Request-Liste

| Paketname | Source NID | Destination NID | CV Index |
|-----------|-----------|-----------------|----------|
| A | 5 | 7 | 1 |
| B | 5 | 2 | 2 |
| C | 5 | 3 | 3 |
| a | 7 | 5 | 5 |
| b | 2 | 5 | 6 |
| c | 3 | 5 | 7 |

*Tabelle 1 aus EFM enthält nur FD1 und FD2

## Fig. 7b

Request-Liste

| Paketname | NID | CV Index (DL) | CV Index (UL) |
|---|---|---|---|
| A, a | 7 | 1 | 5 |
| B, b | 2 | 2 | 6 |
| C, c | 3 | 3 | 7 |

\*Tabelle 2 aus EFM enthält nur FD1 und FD2

Fig. 7c

EP 4 057 533 A1

Scheduling-Tabelle:

| KV: | 1 | 2 | 3 | 4 | 5 | 6 | 7 | 8 | 9 | 10 |
|-----|-----|-----|-----|---|--------|---|--------|--------|--------|----|
|     | BS  | BS  | BS  |   | $FD_2$ |   | $FD_1$ | $FD_2$ | $FD_1$ |    |

*Tabelle 4 aus EFM anthält nur FD1 und FD2

## Fig. 7d

Codier-Matrix:

$$
P_{Frame} =
\begin{bmatrix}
KV1 \\
KV2 \\
KV3 \\
KV4 \\
KV5 \\
KV6 \\
KV7 \\
KV8 \\
KV9 \\
KV10 \\
KV11 \\
KV12 \\
KV13
\end{bmatrix}
=
\begin{bmatrix}
0 & 1 & 0 & 0 & 0 & 0 & 0 & 0 \\
1 & 0 & 0 & 0 & 0 & 0 & 0 & 0 \\
1 & 1 & 0 & 0 & 0 & 0 & 0 & 0 \\
0 & 0 & 0 & 0 & 0 & 0 & 0 & 0 \\
0 & 0 & 0 & 0 & 0 & 1 & 0 & 0 \\
0 & 0 & 0 & 0 & 0 & 0 & 0 & 0 \\
0 & 0 & 0 & 0 & 1 & 0 & 0 & 0 \\
0 & 0 & 0 & 0 & 1 & 1 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0
\end{bmatrix}
*
\begin{bmatrix}
A \\
B \\
C \\
a \\
b \\
c
\end{bmatrix}
$$

*Tabelle 5 aus EFM enthält nur FD1 und FD2

## Fig. 7e

codierte Pakete gemäß Codiermatrix:

| KV: | 1 | 2 | 3 | 4 | 5 | 6 | 7 | 8 | 9 | 10 |
|---|---|---|---|---|---|---|---|---|---|---|
| | B | A | A+B | | b | | a | a+b | | |

## Fig. 7f

EP 4 057 533 A1

vollumfänglicher Header für KV3 nach dem Stand der Technik:

| Source NID | Destination NID | Codier-Koeffizient |
|---|---|---|
| 5 | 7 | für A |
| 5 | 2 | für B |
| | | |
| | | |
| | | |
| | | |
| | | |
| | | |
| Payload des codierten Pakets: A+B | | |

Fig. 7g

EP 4 057 533 A1

reduzierter Header für KV3 basierend auf Request-Liste:

| Codier-Koeffizient |
| :--- |
| für A |
| für B |
| |
| |
| |
| |
| |
| Payload des codierten Pakets: A+B |

Fig. 7h

EP 4 057 533 A1

maximalreduzierter Header für KV3 basierend auf Request-Liste und Codiermatrix:

| Bit ob Source-Paket in Payload des codierten Pakets enthalten ist |
|---|
| 1 |
| 1 |
| |
| |
| |
| |
| |
| Payload des codierten Pakets: A + B |

Fig. 7i

Fig. 8

Fig. 9

EP 4 057 533 A1

Fig. 10

Fig. 11

Fig. 12

EP 4 057 533 A1

Europäisches Patentamt
European Patent Office
Office européen des brevets

## EUROPÄISCHER RECHERCHENBERICHT

**Nummer der Anmeldung**

EP 21 16 2296

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | WO 2020/210682 A1 (APPLE INC [US])<br>15. Oktober 2020 (2020-10-15)<br>* Absatz [198.233]; Abbildungen 14-18 *<br>----- | 1-4,<br>10-20<br>5-9 | INV.<br>H04L1/00 |
| A | WO 2018/100415 A1 (HARMAN INT IND [US]; ZHANG GUOXIA [CN] ET AL.)<br>7. Juni 2018 (2018-06-07)<br>* Absätze [0021] - [0034]; Abbildungen 1,3 *<br>----- | 1-20 | |
| A | GLIGOROSKI DANILO ET AL: "Minimal header overhead for random linear network coding",<br>2015 IEEE INTERNATIONAL CONFERENCE ON COMMUNICATION WORKSHOP (ICCW), IEEE,<br>8. Juni 2015 (2015-06-08), Seiten 680-685,<br>XP033202819,<br>DOI: 10.1109/ICCW.2015.7247260<br>[gefunden am 2015-09-08]<br>* das ganze Dokument *<br>----- | 1-20 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 29. Juli 2021 | Kreppel, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 2296

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2021

| Im Recherchenbericht angeführtes Patentdokument | Datum der Veröffentlichung | Mitglied(er) der Patentfamilie | Datum der Veröffentlichung |
|---|---|---|---|
| WO 2020210682 A1 | 15-10-2020 | KEINE | |
| WO 2018100415 A1 | 07-06-2018 | CN 110024313 A | 16-07-2019 |
| | | EP 3549289 A1 | 09-10-2019 |
| | | US 2019386774 A1 | 19-12-2019 |
| | | WO 2018100415 A1 | 07-06-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2014134276 A1
- US 964780 B2
- US 10270468 B2
- US 20180302836 A
- EP 3384619 A1